# EUROPEAN PATENT SPECIFICATION

(11) **EP 4 579 595 B1**
(45) Date of publication and mention of the grant of the patent: **19.08.2026**
(21) Application number: 24223221.3
(22) Date of filing: 24.12.2024
(51) Int. Cl.: G06T 7/30

(54) **SYSTEMS, DEVICES, AND METHODS FOR IMAGE REGISTRATION**
SYSTEME, VORRICHTUNGEN UND VERFAHREN ZUR BILDREGISTRIERUNG
SYSTÈMES, DISPOSITIFS ET PROCÉDÉS D'ENREGISTREMENT D'IMAGE

(30) Priority: 26.12.2023 CN 202311817243
(43) Date of publication of application: 02.07.2025
(73) Proprietor: Shanghai United Imaging Healthcare Co., Ltd., Shanghai 201807 (CN)
(72) Inventor: LV, Xiaowei, Shanghai, 201807 (CN); WENG, Xin, Shanghai, 201807 (CN)
(74) Representative: Wang, Bo

(56) References cited:
- US-B2- 10 275 896
- DUONG L ET AL: "Curve-based 2D-3D registration of coronary vessels for image guided procedure", PROGRESS IN BIOMEDICAL OPTICS AND IMAGING, SPIE - INTERNATIONAL SOCIETY FOR OPTICAL ENGINEERING, BELLINGHAM, WA, US, vol. 7261, 8 February 2009 (2009-02-08), pages 72610S - 1, XP007917307, ISSN: 1605-7422, ISBN: 978-1-5106-0027-0, DOI: 10.1117/12.811874
- KIM DONGKUE ET AL: "Registration of angiographic image on real-time fluoroscopic image for image-guided percutaneous coronary intervention", INTERNATIONAL JOURNAL OF COMPUTER ASSISTED RADIOLOGY AND SURGERY, SPRINGER, DE, vol. 13, no. 2, 23 November 2017 (2017-11-23), pages 203 - 213, XP036422470, ISSN: 1861-6410, [retrieved on 20171123], DOI: 10.1007/S11548-017-1689-Z

## Description

### CROSS-REFERENCE TO RELATED APPLICATIONS

This application claims priority to Chinese Patent Application No. 202311817243.X, filed on December 26, 2023.

### TECHNICAL FIELD

The present disclosure generally relates to the medical imaging field, and more particularly, relates to systems, devices, and methods for image registration.

### BACKGROUND

During surgery, real-time tracking of blood vessels of a patient is typically achieved by continuously injecting contrast agents. However, this approach places an additional burden on the patient. To mitigate the adverse effects of the continuous contrast agent injections, a preoperative image including a model of the blood vessels can be obtained by performing a preoperative scan. Further, this image can be superimposed on a real-time image obtained via a scan performed during the surgery. However, the registration accuracy between the preoperative image and the real-time image is often compromised by factors such as image artifacts in the real-time image.

Therefore, it is desirable to provide systems, devices, and methods for image registration, which improves the accuracy of image registration.
DUONG L ET AL: "Curve-based 2D-3D registration of coronary vessels for image guided procedure", PROGRESS IN BIOMEDICAL OPTICS AND IMAGING, SPIE - INTERNATIONAL SOCIETY FOR OPTICAL ENGINEERING, BELLINGHAM, WA, US, vol. 7261, 8 February 2009 (2009-02-08), pages 72610S-1, XP007917307, ISSN: 1605-7422, DOI: 10.1117/12.811874 ISBN: 978-1-5106-0027-0 discloses that the study registers pre-operative volumetric data with intra-operative fluoroscopy for specific vessels occurring during the procedure, thereby providing a useful 3D roadmap even without contrast agent injection. In addition, the study incorporates automatic ECG gating for cardiac motion, and identifies respiratory motion through rigid body registration of the vessels.
US 10 275 896 B2 relates to a device and a method for medical imaging of coronary vessels.
KIM DONGKUE ET AL: "Registration of angiographic image on real-time fluoroscopic image for image-guided percutaneous coronary intervention", INTERNATIONAL JOURNAL OF COMPUTER ASSISTED RADIOLOGY AND SURGERY, SPRINGER, DE, vol. 13, no. 2, 23 November 2017 (2017-11-23), pages 203-213, XP036422470, ISSN: 1861-6410, DOI: 10.1007/S11548-017-1689-Z [retrieved on 2017-11-23] presents a spatiotemporal real-time registration method that can provide operators with a single image derived from two separate images: a non-real-time angiographic image showing clear coronary vessel structures and a fluoroscopic image showing clear guidewire shapes.

### SUMMARY

The invention is set out in the appended set of claims.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities, and combinations set forth in the detailed examples discussed below.

### BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG. 1 is a schematic diagram illustrating an exemplary image registration system according to some embodiments of the present disclosure;
FIG. 2 is a block diagram illustrating an exemplary processing device according to some embodiments of the present disclosure;
FIG. 3 is a flowchart illustrating an exemplary process for image registration according to some embodiments of the present disclosure;
FIG. 4 is a s flowchart illustrating an exemplary process for determining an initial registration relationship according to some embodiments of the present disclosure;
FIG. 5 is a flowchart illustrating an exemplary process for determining an initial registration relationship according to some embodiments of the present disclosure;
FIG. 6 is a flowchart illustrating an exemplary process for determining a first motion state of the blood vessels according to some embodiments of the present disclosure;
FIG. 7 is a flowchart illustrating an exemplary process for determining a mapping relationship between physiological phases and blood vessel motion states according to some embodiments of the present disclosure;
FIG. 8 is a flowchart illustrating an exemplary process for determining a first motion state of the blood vessels according to some embodiments of the present disclosure;
FIG. 9 is a flowchart illustrating an exemplary process for determining a target registration relationship between a first medical image and a second medical image according to some embodiments of the present disclosure;
FIG. 10 is a flowchart illustrating another exemplary process for determining a target registration relationship between a first medical image and a second medical image according to some embodiments of the present disclosure;
FIG. 11 is a flowchart illustrating another exemplary process for determining a target registration relationship between a first medical image and a second medical image according to some embodiments of the present disclosure;
FIG. 12 is a schematic diagram illustrating a second medical image including projections of a target centerline according to some embodiments of the present disclosure;
FIG. 13 is a flowchart illustrating an image registration process 1300 according to some embodiments of the present disclosure; and
FIG. 14 is a flowchart illustrating a process 1400 for visualizing blood vessels according to some embodiments of the present disclosure.

### DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well-known methods, procedures, systems, components, and/or circuitry have been described at a relatively high level, without detail, in order to avoid unnecessarily obscuring aspects of the present disclosure. Thus, the present disclosure is not limited to the embodiments shown, but to be accorded the widest scope consistent with the claims.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprise," "comprises," and/or "comprising," "include," "includes," and/or "including," when used in this specification, specify the presence of stated features, integers, steps, operations, elements, and/or components, but do not preclude the presence or addition of one or more other features, integers, steps, operations, elements, components, and/or groups thereof.

It will be understood that when a unit, engine, module, or block is referred to as being "on," "connected to," or "coupled to," another unit, engine, module, or block, it may be directly on, connected or coupled to, or communicate with the other unit, engine, module, or block, or an intervening unit, engine, module, or block may be present, unless the context clearly indicates otherwise. As used herein, the term "and/or" includes any and all combinations of one or more of the associated listed items.

These and other features, and characteristics of the present disclosure, as well as the methods of operation and functions of the related elements of structure and the combination of parts and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

Provided herein are systems and methods for invasive biomedical imaging/treatment, such as for disease diagnosis, disease therapy, or research purposes. In some embodiments, the systems may include an imaging system. The imaging system may include a single modality system and/or a multi-modality system. The term "modality" used herein broadly refers to an imaging or treatment method or technology that gathers, generates, processes, and/or analyzes imaging information of a subject or treatments the target subject. The single modality system may include, for example, an ultrasound imaging system, an X-ray imaging system, a computed tomography (CT) system, a magnetic resonance imaging (MRI) system, an ultrasonography system, a positron emission tomography (PET) system, an optical coherence tomography (OCT) imaging system, an ultrasound (US) imaging system, an intravascular ultrasound (IVUS) imaging system, a near-infrared spectroscopy (NIRS) imaging system, a digital subtraction angiography (DSA) system, or the like, or any combination thereof. The multi-modality system may include, for example, an X-ray imaging-magnetic resonance imaging (X-ray-MRI) system, a positron emission tomography-X-ray imaging (PET-X-ray) system, a single photon emission computed tomography-magnetic resonance imaging (SPECT-MRI) system, a positron emission tomography-computed tomography (PET-CT) system, a C-arm system, a positron emission tomography-magnetic resonance imaging (PET-MRI) system, a digital subtraction angiography-magnetic resonance imaging (DSA-MRI) system, etc. It should be noted that the medical system described below is merely provided for illustration purposes, and is not intended to limit the scope of the present disclosure.

In the present disclosure, the target subject may include a biological object and/or a non-biological object. The biological object may be a human being, an animal, a plant, or a specific portion, organ, and/or tissue thereof. For example, the target subject may include the head, the neck, the thorax, the heart, the stomach, a blood vessel, a soft tissue, a tumor, a nodule, or the like, or any combination thereof. In some embodiments, the target subject may be a man-made composition of organic and/or inorganic matters that are with or without life. The terms "object" and "subject" are used interchangeably in the present disclosure.

In the present disclosure, the term "image" may refer to a two-dimensional (2D) image, a three-dimensional (3D) image, or a four-dimensional (4D) image (e.g., a time series of 3D images). In some embodiments, the term "image" may refer to an image of a region (e.g., a region of interest (ROI)) of a subject. In some embodiments, the image may be a medical image, an optical image, etc.

In the present disclosure, a representation of a subject (e.g., an object, a patient, or a portion thereof) in an image may be referred to as "subject" for brevity. For instance, a representation of an organ, tissue (e.g., a heart, a liver, a lung), or an ROI in an image may be referred to as the organ, tissue, or ROI, for brevity. Further, an image including a representation of a subject, or a portion thereof, may be referred to as an image of the target subject, or a portion thereof, or an image including the target subject, or a portion thereof, for brevity. Still further, an operation performed on a representation of a subject, or a portion thereof, in an image may be referred to as an operation performed on the target subject, or a portion thereof, for brevity. For instance, a segmentation of a portion of an image including a representation of an ROI from the image may be referred to as a segmentation of the ROI for brevity.

The present disclosure relates to systems, devices, and methods for image registration. The methods may include obtaining a first medical image and a second medical image of a target subject. The first medical image may indicate blood vessels of the target subject, and the second medical image may indicate an interventional tool in the target subject. The methods may include determining an initial registration relationship between the first medical image and the second medical image, determining a first motion state of the blood vessels at the acquisition time based on a first physiological feature of the target subject at an acquisition time of the second medical image, and determining a target registration relationship between the first medical image and the second medical image based on the initial registration relationship and the first motion state of the blood vessels.

By introducing the first motion state, the image registration process may be performed not only based on the first medical image (e.g., the blood vessels) and the second medical image (e.g., the interventional tool) themselves, but also by considering the first motion state of the blood vessels at the acquisition time when the second medical image is acquired. This approach reduces the impact of factors such as noise, artifacts (e.g., those caused by the physiological motion of the target subject) on the registration process, thereby improving the accuracy of the registration result.

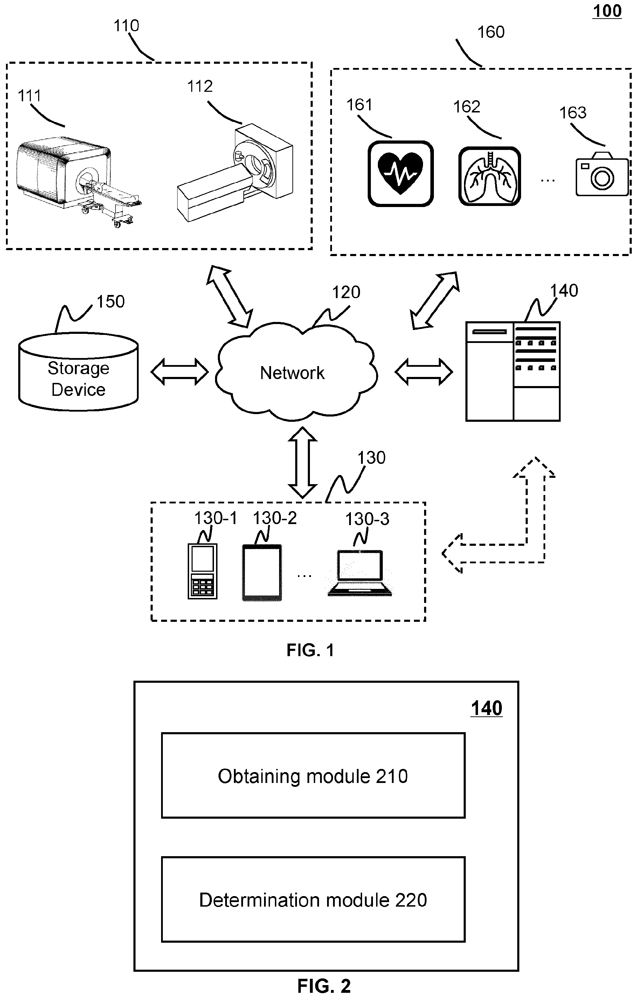

FIG. 1 is a schematic diagram illustrating an exemplary image registration system 100 according to some embodiments of the present disclosure. As shown in FIG. 1, the image registration system 100 may include a medical imaging device 110, a network 120, one or more terminals 130, a processing device 140, a storage device 150, and one or more collection devices 160. In some embodiments, the medical imaging device 110, the terminal(s) 130, the processing device 140, the storage device 150, and/or the collection device(s) 160 may be connected to and/or communicate with each other via a wireless connection, a wired connection, or a combination thereof. The connection among the components of the image registration system 100 may be variable. Merely by way of example, the medical imaging device 110 may be connected to the processing device 140 through the network 120, as illustrated in FIG. 1. As another example, the medical imaging device 110 may be connected to the processing device 140 directly. As a further example, the storage device 150 may be connected to the processing device 140 through the network 120, as illustrated in FIG. 1, or connected to the processing device 140 directly.

The medical imaging device 110 may be configured to generate or provide image data by scanning a target subject (or at least a portion of the target subject). In some embodiments, the medical imaging device 110 may include a first imaging device 111 and a second imaging device 112. The first imaging device 111 may be configured to generate a first medical image of the target subject, and the second imaging device 112 may be configured to generate a second medical image of the target subject. In some embodiments, the first imaging device 111 and the second imaging device 112 may be medical imaging devices based on different imaging techniques. For example, the first imaging device 111 may include a medical imaging device based on an angiography technique, and the second imaging device 112 may include a medical imaging device based on a fluoroscopy technique. Correspondingly, the first medical image may include an angiography image, and the second medical image may include a fluoroscopy image.

Merely by way of example, the first imaging device 111 may include a CT imaging device, a DSA imaging device, etc., and the second imaging device 111 may include an X-ray imaging device, etc. The CT imaging device utilizes a computed tomography angiography (CTA) technique to obtain angiography images. The CTA technique is a type of medical test that combines a CT scan with an injection of a contrast agent to produce images of blood vessels of the subject. The DSA imaging device utilizes a DSA technique to obtain angiography images. A procedure of the DSA technique involves inserting a catheter into the blood vessels of the target subject to inject a contrast agent into the blood vessels and taking angiography images of the blood vessels. The X-ray imaging device utilizes the fluoroscopy technique to obtain fluoroscopy images. The fluoroscopy technique may be performed without a contrast agent. For example, the X-ray imaging device may include a scanning source that emits X-rays to scan a specific region of the target subject. Then a detector may detect one or more X-rays scattered by the specific region, which may be used to generate fluoroscopy images (i.e., X-ray images) associated with the specific region.

The network 120 may include any suitable network that can facilitate the exchange of information and/or data for the image registration system 100. In some embodiments, one or more components (e.g., the medical imaging device 110, the terminal 130, the processing device 140, the storage device 150, the collection device(s) 160, etc.) of the image registration system 100 may communicate information and/or data with one or more other components of the image registration system 100 via the network 120. For example, the processing device 140 may obtain image data from the medical imaging device 110 via the network 120. As another example, the processing device 140 may obtain user instructions from the terminal 130 via the network 120. As a further example, the processing device 140 may obtain physiological features from the collection device(s) 160. In some embodiments, the network 120 may include one or more network access points.

The terminal(s) 130 may include a mobile device 130-1, a tablet computer 130-2, a laptop computer 130-3, or the like, or any combination thereof. In some embodiments, the mobile device 130-1 may include a smart home device, a wearable device, a mobile device, a virtual reality device, an augmented reality device, or the like, or any combination thereof. In some embodiments, the terminal(s) 130 may include a processing unit, a display unit, a sensing unit, an input/output (I/O) unit, a storage unit, etc. In some embodiments, the display unit may include an interactive interface that is configured to receive an input from a user. In some embodiments, the terminal(s) 130 may be part of the processing device 140.

The processing device 140 may process data and/or information obtained from one or more components (the medical imaging device 110, the terminal(s) 130, and/or the storage device 150, and/or the collection device(s) 160) of the image registration system 100. For example, the processing device 140 may obtain a first medical image and a second medical image of the target subject, and determine an initial registration relationship between the first medical image and the second medical image. As another example, the processing device 140 may determine, based on a first physiological feature of the target subject at an acquisition time of the second medical image, a first motion state of blood vessels at the acquisition time. As still another example, the processing device 140 may determine a target registration relationship between the first medical image and the second medical image based on the initial registration relationship and the first motion state of the blood vessels. In some embodiments, the processing device 140 may be a single server or a server group. The server group may be centralized or distributed. In some embodiments, the processing device 140 may be local or remote. In some embodiments, the processing device 140 may be implemented on a cloud platform. In some embodiments, the processing device 140 may include a microcontroller unit (MCU) or a field-programmable gate array (FPGA).

In some embodiments, the processing device 140 may be implemented by a computing device. For example, the computing device may include a processor, a storage, an input/output (I/O), and a communication port. The processor may execute computer instructions (e.g., program codes) and perform functions of the processing device 140 in accordance with the techniques described herein. The computer instructions may include, for example, routines, programs, objects, components, data structures, procedures, modules, and functions, which perform particular functions described herein. In some embodiments, the processing device 140, or a portion of the processing device 140 may be implemented by a portion of the terminal 130.

The storage device 150 may store data/information obtained from the medical imaging device 110, the terminal(s) 130, the collection device(s) 160, and/or any other component of the image registration system 100. In some embodiments, the storage device 150 may include a mass storage, a removable storage, a volatile read-and-write memory, a read-only memory (ROM), or the like, or any combination thereof. In some embodiments, the storage device 150 may store one or more programs and/or instructions to perform exemplary methods described in the present disclosure. In some examples, the storage device 150 may include a storage remotely located relative to the processing device 140, and the remote storage may be connected to the processing device 140 via the network 120.

The collection device(s) 160 may be configured to collect data relating to physiological motions of the subject. Exemplary physiological motions may include a respiration motion, a cardiac motion, etc., or any combination thereof. In some embodiments, the data relating to physiological motions may include physiological motion signals, optical images, medical imaging data, etc.

The physiological motion signals may be collected by physiological motion signal detectors. For example, the physiological motion signal detectors include a respiratory detector 161 for collecting the respiration signal, an electrocardiogram (ECG) detector 162 for collecting the ECG signal, a pulse detector for collecting the pulse signal, etc. In some embodiments, the physiological motion signals may include data relating to physiological features such as a physiological phase, a physiological frequency, a physiological amplitude, etc. The processing device 140 may determine the physiological features based on the physiological motion signals.

The optical images may include color images, infrared images, point cloud laser images, depth images, etc. In some embodiments, the optical images may be used to determine physiological motion signals. For example, taking the physiological motion being a respiration motion as an example, a plurality of optical images (e.g., depth images, infrared images, point cloud laser images) of the chest of the target subject may be collected by an optical imaging device 163. The plurality of optical images may be collected sequentially over at least one respiration cycle and indicate the rise and fall of the chest in the at least one respiration cycle. The processing device 140 may determine a real-time position of the chest in each optical image, and generate a respiration motion signal based on changes of the real-time positions over the plurality of optical images. As another example, the medical images may include X-ray images indicating a tissue that may generate a physiological motion (e.g., the heart, the lungs, etc.) in the target subject. The processing device 140 may determine a real-time position of the tissue in each X-ray image, and generate a physiological motion signal based on changes of the real-time positions over the X-ray images.

The medical imaging data may include scan data obtained by scanning the target subject using a medical imaging device (e.g., the medical imaging device 110). The processing device 140 may determine real-time positions of a tissue that undergoes the physiological motion (e.g., the heart, the lungs, etc.) in the target subject based on the scan data. Further, the processing device 140 may generate a physiological motion signal based on changes of the real-time positions.

In some embodiments, the image registration system 100 may include one or more additional components and/or one or more components of the image registration system 100 described above may be omitted. Additionally or alternatively, two or more components of the image registration system 100 may be integrated into a single component. A component of the image registration system 100 may be implemented on two or more sub-components.

FIG. 2 is a block diagram illustrating an exemplary processing device 140 according to some embodiments of the present disclosure. The modules illustrated in FIG. 2 may be implemented on the processing device 140. In some embodiments, the processing device 140 may be in communication with a computer-readable storage medium (e.g., the storage device 150 illustrated in FIG. 1) and execute instructions stored in the computer-readable storage medium. The processing device 140 may include an obtaining module 210 and a determination module 220.

The obtaining module 210 may be configured to obtain a first medical image and a second medical image of a target subject. The first medical image may indicate blood vessels of the target subject. The second medical image may indicate an interventional tool in the target subject. More descriptions regarding the obtaining the first medical image and the second medical image may be found elsewhere in the present disclosure. See, e.g., operation 310 and relevant descriptions thereof.

The determination module 220 may be configured to determine an initial registration relationship between the first medical image and the second medical image. The determination module 220 may be further configured to determine, based on a first physiological feature of the target subject at an acquisition time of the second medical image, a first motion state of the blood vessels at the acquisition time. The determination module 220 may be further configured to determine a target registration relationship between the first medical image and the second medical image based on the initial registration relationship and the first motion state of the blood vessels. More descriptions regarding the determining the initial registration relationship, the first motion state, and the target registration relationship may be found elsewhere in the present disclosure. See, e.g., operation 320-operation 340 and relevant descriptions thereof.

It should be noted that the above descriptions of the processing device 140 are provided for the purposes of illustration, and are not intended to limit the scope of the present disclosure. For persons having ordinary skills in the art, various variations and modifications may be conducted under the guidance of the present disclosure. However, those variations and modifications do not depart from the scope of the present disclosure. In some embodiments, the processing device 140 may include one or more other modules. For example, the processing device 140 may include a storage module to store data generated by the modules in the processing device 140. In some embodiments, any two of the modules may be combined as a single module, and any one of the modules may be divided into two or more units.

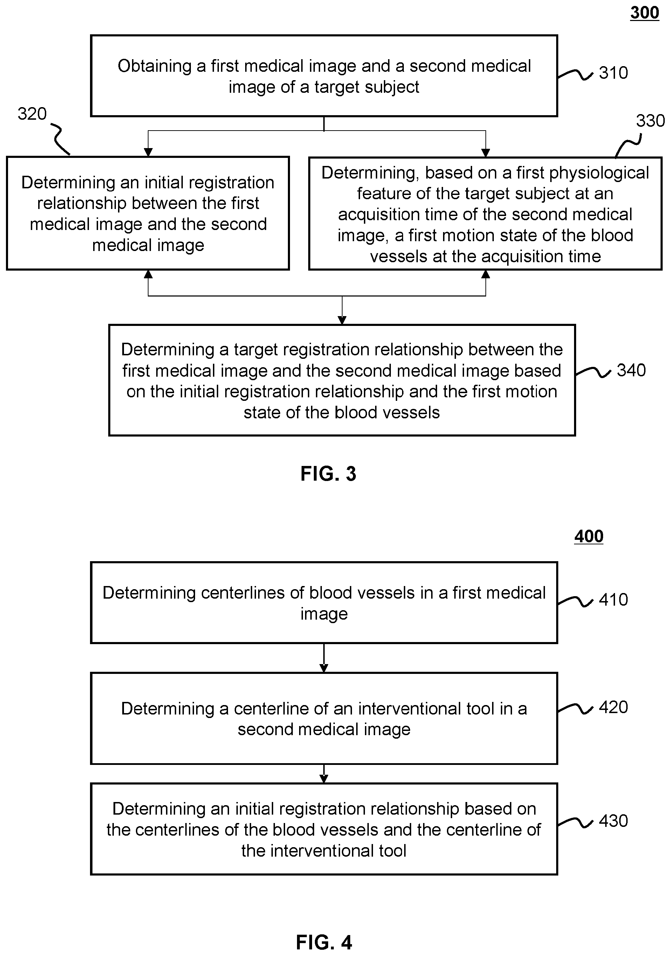

FIG. 3 is a flowchart illustrating an exemplary process 300 for image registration according to some embodiments of the present disclosure.

In 310, the processing device 140 (e.g., the obtaining module 210) may obtain a first medical image and a second medical image of a target subject. The first medical image may indicate blood vessels of the target subject, and the second medical image may indicate an interventional tool in the target subject.

The first medical image may include an angiography image collected before a surgery. The surgery refers to an interventional surgery performed on a target portion (e.g., the liver) of the target subject. The angiography image may be collected based on the angiography technique before the interventional surgery. For example, before the interventional surgery, a contrast agent may be injected into blood vessels in the liver of the target subject, and an angiography imaging device (e.g., the first imaging device 111 illustrated in FIG. 1) may perform a scan (e.g., a CT scan) on the liver including the contrast agent to obtain the angiography image. The blood vessels including the contrast agent may be visualized in the angiography image. In such cases, the first medical image may indicate the blood vessels of the target subject.

In some embodiments, the blood vessels of the target subject indicated by the first medical image refer to blood vessels in the target portion (e.g., the liver) of the target subject on which the interventional surgery is performed. For example, the blood vessels may include a vascular tree composed of blood vessels (hepatic arteries, coronary arteries, etc.) in the target portion.

In some embodiments, the first medical image is a 3D image or a 2D image. For example, the first medical image may be a 3D angiography image. The 3D angiography image may include 3D information of a plurality of blood vessels in the target portion of the target subject, which may provide abundant and clear information (position, shape, size, etc.) regarding the blood vessels in the target portion. As another example, the first medical image may be a 2D DSA image. The 2D DSA may include 2D information of a plurality of blood vessels in the target portion of the target subject, which may provide abundant and clear information (position, shape, size, etc.) regarding the blood vessels in the target portion.

The second medical image may include a fluoroscopy image collected in the surgery. The fluoroscopy image may be collected based on the fluoroscopy technique in the interventional surgery. For example, the interventional tool (e.g., a guidewire) may be pushed into one (also referred to as a target blood vessel) of the blood vessels in the liver to perform the interventional surgery. In the interventional surgery, a fluoroscopy imaging device (e.g., the second imaging device 112 illustrated in FIG. 1) may perform a scan (e.g., an X-ray scan) on the liver to obtain the fluoroscopy image. The interventional tool may be visualized in the fluoroscopy image. In such cases, the second medical image may indicate the interventional tool in the target subject.

In some embodiments, the second medical image is a 2D fluoroscopy image. The 2D angiography image may include 2D information of the interventional tool in the target subject. In some embodiments, a position of target blood vessel can be represented by the interventional tool in the target subject. In such cases, the position of the target blood vessel can be obtained without injecting the contrast agent.

In some embodiments, a plurality of second medical images may be collected in the interventional surgery. For example, a video including multiple frames of angiography images may be collected in the interventional surgery. Each frame of angiography image may be obtained as the second medical image for further processing (e.g., the image registration).

It should be noted that although the present disclosure is described with reference to an angiography image collected before a surgery as the first medical image and a 2D fluoroscopy image collected during the surgery as the second medical image, the first medical image and the second medical image can be any other type of medical images that can respectively indicate the blood vessels and the interventional tool, and can be collected at any two different acquisition times. For example, the first medical image may include an MR image. The MR image may be collected by an MRI system based a specific MR sequence. Exemplary MR sequences may include a T1CE sequence, a TOF, etc.

In some embodiments, the processing device 140 may obtain the first medical image directly from the imaging device (e.g., the first imaging device 111). In some embodiments, the first medical image may be stored in a storage device (e.g., the storage device 150 illustrated in FIG. 1), and the processing device 140 may obtain the first medical image from the storage device. In some embodiments, the processing device 140 may obtain the second medical image directly from the imaging device (e.g., the second imaging device 112). For example, the processing device 140 may obtain the second medical image from the second imaging device 112 in real-time such that the image registration may be performed on the first medical image and the real-time second medical image, which may provide timely guidance for an operator of the interventional tool.

In 320, the processing device 140 (e.g., the determination module 220) may determine an initial registration relationship between the first medical image and the second medical image.

The initial registration relationship refers to a relationship obtained by registering the first medical image and the second medical image. In some embodiments, feature data of the first medical image and feature data of the second medical image may be determined, and the initial registration relationship may be determined by registering those feature data.

The feature data of the first medical image (also referred to as "vascular feature data") may include feature data related to the blood vessels of the target subject. The vascular feature data may be obtained by extracting features related to the blood vessels in the first medical image. Exemplary vascular feature data may include at least one of vascular topology data, vascular point cloud data, vascular point cloud features, vascular image features, etc.

The feature data of the second medical image (also referred to as "interventional tool feature data") may include feature data related to the interventional tool (e.g., the guidewire) in the target subject. The interventional tool feature data may be obtained by extracting features related to the interventional tool in the first medical image. Exemplary interventional tool feature data may include at least one of interventional tool topology data, interventional tool point cloud data, interventional tool point cloud features, interventional tool image features, etc. The (vascular/interventional tool) topology data refers to data related to the distribution and/or connection manner of nodes in the blood vessels/interventional tool. The (vascular/interventional tool) point cloud data refers to point cloud data corresponding to the blood vessels/ interventional tool. The (vascular/interventional tool) point cloud features refer to features related to the point cloud data corresponding to the blood vessels/ interventional tool. Exemplary point cloud features may include a coordinate, a normal, a curvature, a feature value, etc. The (vascular/interventional tool) image features refer to features related to image data related to the blood vessels/ interventional tool. Exemplary image features may include a color feature, a texture feature, a shape feature, spatial relationship feature, etc. of the image (i.e., the first medical image and the second medical image).

In some embodiments, the processing device 140 may determine the initial registration relationship by registering the vascular feature data with the interventional tool feature data. For example, the processing device 140 may determine the initial registration relationship by registering the vascular topology data with the interventional tool topology data. As another example, the processing device 140 may determine the initial registration relationship by registering the vascular point cloud data with the interventional tool point cloud data. As a further example, the processing device 140 may determine the initial registration relationship by registering the vascular point cloud features with the interventional tool point cloud features. The interventional tool may indicate the position of the target blood vessel in which the interventional tool is located. In such cases, an initial image registration operation between the first medical image and the second medical image may be performed based on the interventional tool without the injection of the contrast agents, which can avoid or reduce the injection of the contrast agents into the target subject, thereby reducing or avoiding harm to the target subject. In some embodiments, the first medical image and/or the second medical image may be represented in form of matrices. Correspondingly, the initial registration relationship may be represented in form of a matrix.

In some embodiments, the processing device 140 may determine the initial registration relationship based on centerlines of the blood vessels in the first medical image and a centerline of the interventional tool in the second medical image. In some embodiments, the centerlines of the blood vessels and/or the centerline of the interventional tool may be represented by the feature data. More descriptions regarding the determining the initial registration relationship based on centerlines of the blood vessels and a centerline of the interventional tool may be found elsewhere in the present disclosure. See, e.g., FIG. 4 and relevant descriptions thereof.

In 330, the processing device 140 (e.g., the determination module 220) may determine, based on a first physiological feature of the target subject at an acquisition time of the second medical image, a first motion state of the blood vessels at the acquisition time.

The first physiological feature refers to a feature related to a first physiological motion of the target subject at the acquisition time of the second medical image. In some embodiments, the first physiological feature may include a feature of first physiological motion signal. For example, the first physiological motion may include a respiration motion or a cardiac motion. Correspondingly, the first physiological motion signal may include a respiration signal or an ECG signal collected by a collection device (e.g., the collection device(s) 160 illustrated in FIG. 1). The first physiological feature may include a physiological phase, a physiological frequency, a physiological amplitude, etc., or any combination thereof, of the first physiological motion signal. In some embodiments, a plurality of second medical images are collected during the surgery, and each second medical image corresponds to one physiological phase of the first physiological motion.

In some embodiments, at least a portion of the target subject may move with the first physiological motion, which causes artifacts in the second medical image. For example, the target portion (e.g., the liver) and/or the blood vessels in the target portion may move with the first physiological motion such that the target portion and/or the interventional tool may have artifacts, which results in a registration error between the first medical image and the second medical images, and reduces the accuracy of a result (i.e., the initial registration relationship) of the initial image registration operation performed based on the interventional tool.

The first motion state of the blood vessels at the acquisition time includes to motion information of the blood vessels at the acquisition time. Exemplary motion information may include information indicating a contraction or relaxation state of the blood vessels, a contraction or relaxation degree of the blood vessels, a pulsation degree of the blood vessels, etc. Taking the first physiological motion being a respiratory motion as an example, the first motion state of the blood vessels at the acquisition time may be a motion (e.g., a motion direction, a motion distance) of the blood vessels at the acquisition time relative to a previous acquisition time of a previous second medical image. Since each second medical image corresponds to one respiratory phase, the acquisition time and the previous acquisition time can also be referred to as the current respiratory phase and the previous respiratory phase, the first motion state may be a motion of the blood vessels at the current respiratory phase relative to the previous respiratory phase. Merely by way of example, if the current respiratory phase (or first physiological feature) indicates that the exhalation has reached 5 seconds, the first motion state of the blood vessels at the acquisition time may be that the blood vessels at the current respiratory phase moves 18 mm relative to a previous respiratory phase.

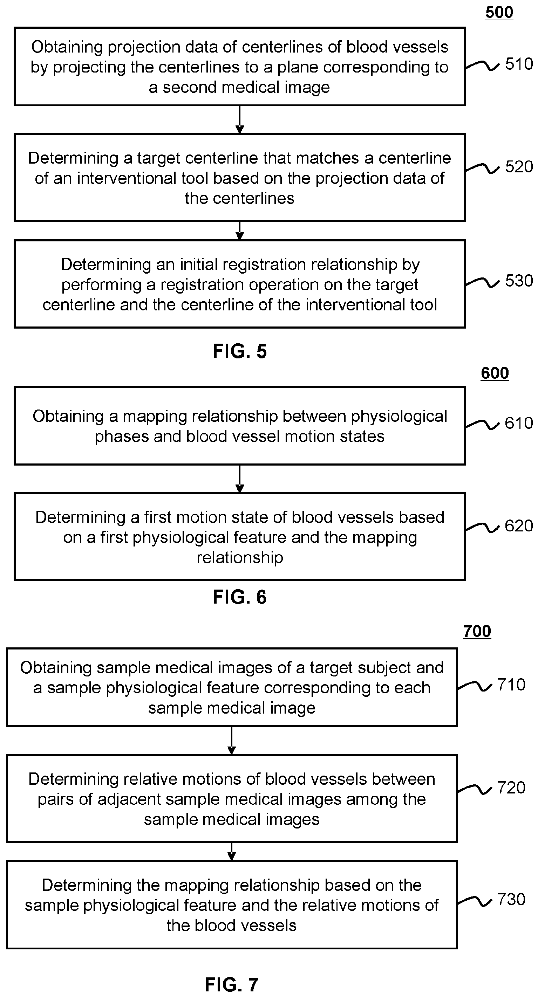

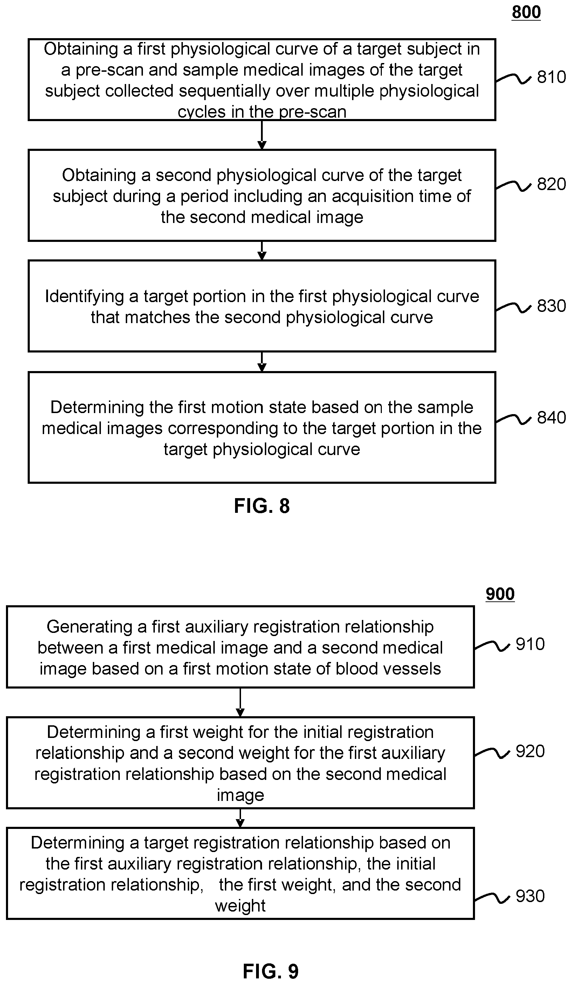

In some embodiments, to determine the first motion state of the blood vessels at the acquisition time, the processing device 140 may obtain a mapping relationship between physiological phases and blood vessel motion states, and determine the first motion state of the blood vessels based on the first physiological feature and the mapping relationship. More descriptions regarding the determining the first motion state of the blood vessels based on the first physiological feature and the mapping relationship may be found elsewhere in the present disclosure. See, e.g., FIG. 6, FIG. 8, and relevant descriptions thereof.

In some embodiments, the image registration may be performed on each second medical image in the plurality of the second medical images collected in the surgery. Correspondingly, the processing device 140 may determine the first motion state of the blood vessels at the acquisition time of the second medical image for the image registration. In some embodiments, the image registration may be performed on multiple second medical images collected in a continuous period in the surgery. Correspondingly, the processing device 140 may determine, based on the first physiological features in the continuous period, the first motion states of the blood vessels in the continuous period for the image registration.

In 340, the processing device 140 (e.g., the determination module 220) may determine a target registration relationship between the first medical image and the second medical image based on the initial registration relationship and the first motion state of the blood vessels.

The target registration relationship refers to a registration relationship for registering the first medical image with the second medical image. Since the first medical image and the second medical image are collected at different times, mismatches (e.g., mismatches due to patient movement, internal structure change) may exist between those two images. The target registration relationship may be used to registering the first medical image with the second medical image such that the blood vessels in the registered first medical image is consistent with the second medical image.

In some embodiments, the target registration relationship may be determined based on the initial registration relationship and the first motion state of the blood vessels. For example, the processing device 140 may generate a first auxiliary registration relationship between the first medical image and the second medical image based on the first motion state of the blood vessels, and determine the target registration relationship by performing a weighting operation on the initial registration relationship and the first auxiliary registration relationship. In some embodiments, the target registration relationship may be determined based on the initial registration relationship and the first motion state and/or a second motion state of the blood vessels. In some embodiments, the target registration relationship may be further determined based on a rigid motion of the body of the target subject. More descriptions regarding the determining the target registration relationship may be found elsewhere in the present disclosure. See, e.g., FIGs. 9-11 and relevant descriptions thereof.

It should be noted that the above description of the process 300 is merely provided for the purposes of illustration, and not intended to limit the scope of the present disclosure. For persons having ordinary skills in the art, multiple variations or modifications may be made under the teachings of the present disclosure. However, those variations and modifications do not depart from the scope of the present disclosure. For example, the process 300 may further include an operation for generating a target medical image by registering the first medical image with the second medical image based on the target registration relationship and generating a fusion image indicating the interventional tool in the blood vessels of the target subject by fusing the target medical image with the second medical image. The target medical image is the registered first medical image in which blood vessels are consistent with the second medical image. The fusion image may be displayed to an operator of the interventional tool, thereby providing guidance for the operator.

According to some embodiment of the present disclosure, the initial registration relationship may be calibrated based on the first motion state of the blood vessels to obtain a more accurate target registration relationship. Further, the first medical image may be registered with the second medical image based on the target registration relationship to generate a target medical image. In the target medical image, the blood vessels can be accurately registered to the second medical image based on the target registration relationship, which can provide the operator with real-time position information of the blood vessels in the surgery. By combining the initial registration relationship determined based on the interventional tool and the first motion state determined based on the first physiological feature, an image registration with higher accuracy may be performed. In the image registration, the initial registration relationship can be calibrated based on the first physiological feature, which effectively corrects the registration error caused by the motion of the target portion (e.g., the liver) and/or the blood vessels in the target portion along with the first physiological motion, while reducing or eliminating the impact of artifacts caused by the first physiological motion on an image registration result, thereby improving the accuracy of the image registration, and providing the operator with more accurate information during surgery to assist the operator in diagnosis.

FIG. 4 is a flowchart illustrating an exemplary process 400 for determining an initial registration relationship according to some embodiments of the present disclosure. In some embodiments, operation 320 in process 300 may be performed based on process 400. In some embodiments, the process 400 may be performed by the determination module 220 of the processing device 140.

In 410, the processing device 140 may determine centerlines of the blood vessels in the first medical image.

The first medical image may indicate blood vessels in the target portion of the target subject. The processing device 140 may determine a centerline of each blood vessel in the first medical image. In some embodiment, the processing device 140 may determine centerlines of the blood vessels in the first medical image using a first image segmentation model. For example, the processing device 140 may input the first medical image into the first image segmentation model such that the first image segmentation model may output the centerlines of the blood vessels in the first medical image. The first image segmentation model may be a trained machine learning model or a trained deep learning model for extracting blood vessel centerlines. A training process of the first image segmentation model may be performed with a sample first medical image as input and centerlines of the blood vessels in the sample first medical image as a label. In some embodiments, the processing device 140 may generate a blood vessel mask by segmenting the blood vessels from the first medical image, and then determine the centerlines of the blood vessels based on the blood vessel mask.

In 420, the processing device 140 may determine a centerline of the interventional tool in the second medical image.

In some embodiment, the processing device 140 may determine a mask of the interventional tool in the second medical image. Further, the processing device 140 may determine the centerline of the interventional tool based on the mask.

As used herein, the mask of the interventional tool refers to an image in which the interventional tool is separates or isolates from the rest regions in the second medical image. In the mask, the rest regions in the second medical image may be hided while the interventional tool is retained or displayed for editing. In some embodiment, the processing device 140 may determine the mask of the interventional tool in the second medical image based on continuous frames of second medical images. The continuous frames of second medical images refer to two or more consecutive frames of second medical images in the plurality of second medical images collected in the surgery. For example, the continuous frames of second medical images may include the second medical image (also referred to as "a current frame of second medical image") and one or more previous second medical images (e.g., 4 frames of second medical images collected before the current frame of second medical image). In some embodiment, the one or more previous second medical images may provide reference information for determine the mask of the interventional tool in the current frame of second medical image. Since the interventional tool is often thin and blurred in the current frame of second medical image due to the first physiological motion, a mask of the interventional tool determined based on only the current frame of second medical image is not clear. Therefore, the consecutive frames may be processed together such that the previous frames can provide reference information to more accurately deduce the position of the interventional tool in the current frame, which improves the accuracy of the determination of the mask of the interventional tool in the current frame. In some embodiment, a count of the consecutive frames may be determined based information such as clarity, a noise level, etc. in the current frame. For example, if the current frame has high clarity and/or low noise level, relatively few previous frames may be used to provide the reference information for the current frame, i.e., the count of continuous frames may be relatively small. If the current frame has low clarity and/or high noise level, relatively more previous frames may be used to provide the reference information for the current frame, i.e., the count of continuous frames may be relatively large.

In some embodiment, the processing device 140 may determine the mask of the interventional tool in the second medical image using a second image segmentation model. For example, the processing device 140 may input 5 consecutive frames of second medical images into the second image segmentation model, and the second image segmentation model may output the mask of the interventional tool in the current frame of second medical image. The second image segmentation model may be a trained machine learning model or a trained deep learning model for interventional tool segmentation. A training process of the second image segmentation model may be performed with consecutive frames of sample second medical images as input and a mask of the interventional tool in a current sample second medical image as a label.

In some embodiment, the processing device 140 may determine the centerline of the interventional tool in the second medical image using a centerline extraction algorithm. For example, the processing device 140 may input the mask of the interventional tool into the centerline extraction algorithm, and the centerline extraction algorithm may output the centerline of the interventional tool in the second medical image. The centerline extraction algorithm may include a minimum spanning tree algorithm (e.g., a minimum spanning tree algorithm model). A training process of the minimum spanning tree algorithm model may be performed with a mask of an interventional tool in a sample second medical image as input and a centerline of the interventional tool as a label.

In 430, the processing device 140 may determine the initial registration relationship based on the centerlines of the blood vessels and the centerline of the interventional tool.

In some embodiments, when both the first medical image and the second medical image are 2D images, the initial registration relationship may be determined by registering the centerlines of the blood vessels with the centerline of the interventional tool.

In some embodiment, when the first medical image is a 3D image while the second medical image is a 2D image, the processing device 140 may perform the process 500 in FIG. 5 for determining the initial registration relationship.

In 510, the processing device 140 may obtain projection data of the centerlines of the blood vessels by projecting the centerlines to a plane corresponding to the second medical image.

As aforementioned, the first medical image is a 3D image, and the second medical image is a 2D image. The processing device 140 may perform a 2D projection operation on the centerlines of the blood vessels in the first medical image. In the 2D projection operation, the centerlines of the blood vessels in the first medical image may be projected to the 2D plane corresponding to the second medical image. The 2D plane corresponding to the second medical image refers to an image plane where the second medical image is located. In such cases, the projection data of the centerlines of the blood vessels may be obtained. The projection data may include 2D projections (also referred to as "branches") of the centerlines of the blood vessels. Each branch may correspond to one centerline of one blood vessel in the first medical image.

In 520, the processing device 140 may determine a target centerline that matches the centerline of the interventional tool based on the projection data of the centerlines.

In some embodiments, to determine the target centerline, the processing device 140 may compare the projection data with the centerline of the interventional tool in the second medical image. For example, for each centerline in the first medical image, the processing device 140 may determine a difference between the corresponding branch in the projection data and the centerline of the interventional tool in the second medical image. Further, the processing device 140 may determine a target branch in the branches corresponding to the blood vessels that best matches the centerline of the interventional tool based on the differences. The target branch that best matches the centerline of the interventional tool refers to a branch that has a smallest difference from the centerline of the interventional tool. For example, the branch and the centerline of the interventional tool may include point cloud data. The difference may include an average distance between the point cloud data of the branch and the centerline of the interventional tool. Further, the centerline corresponding to the target branch may be determined as the target centerline.

In 530, the processing device 140 may determine the initial registration relationship by performing a registration operation on the target centerline and the centerline of the interventional tool.

In some embodiments, the processing device 140 may determine the initial registration relationship by performing the registration operation on the target centerline and the centerline of the interventional tool based on a rigid registration algorithm or a deformation registration algorithm.

In some embodiments, the processing device 140 may determine the initial registration relationship based on a pre-registration relationship between the first medical image and the second medical image. The pre-registration relationship may be obtained by performing a pre-registration operation based on organs or tissues that are not easily affected by physiological motions of the target subject. For example, in the pre-registration operation, the first medical image and the second medical image may be pre-aligned based on bone tissues in the first medical image and the second medical image. Correspondingly, the pre-registration relationship refers to a registration relationship for pre-aligning the first medical image with the second medical image.

In some embodiments, the pre-registration operation may be performed on a first frame of second medical image in the plurality of second medical images collected in the surgery. The pre-registration relationship may be used to roughly align the first medical image with the first frame of second medical image, which may be used as the basis for the image registration of the first frame and subsequent frames. In some embodiments, the pre-registration operation may be performed on the second medical image in response to detecting a rigid motion of the target subject during the surgery. For example, the processing device 140 may obtain monitoring information of the body of the target subject during the surgery. In response to detecting a rigid motion of the body of the target subject based on the monitoring information, the processing device 140 may perform pre-registration operation on the first medical image and the current frame of second medical image. In such cases, the first medical image and the second medical image may be pre-aligned after the rigid motion of the body, which may avoid the situation in which the distance between the blood vessels in the first medical image and the interventional tool in the second medical image is too far to be registered due to a large amplitude of rigid motion. In some embodiments, the pre-registration operation may be performed on the first frame of second medical image, and in response to detecting a rigid motion of the body of the target subject based on the monitoring information, the processing device 140 may update the pre-registration relationship based on the rigid motion.

Further, the processing device 140 may determine the initial registration relationship based on the pre-registration relationship and the registration operation performed on the target centerline and the centerline of the interventional tool.

In some embodiments, the initial registration relationship may be obtained based on an iteration process performed on continuous frames of second medical images. In the iteration process, the initial registration relationship corresponding to a current frame of second medical image may be determined based on the previous frame of second medical image. For example, for the first frame of second medical image, the processing device 140 may perform the pre-registration operation on the first medical image and the first frame of second medical image to obtain the pre-registration relationship. Further, the processing device 140 may determine the initial registration relationship corresponding to the first frame of second medical image by performing the registration operation on the target centerline and the centerline of the interventional tool in the first frame of second medical image and based on the pre-registration relationship. Further, for a second frame of second medical image, the processing device 140 may determine the initial registration relationship corresponding to the second frame of second medical image by performing the registration operation on the target centerline and the centerline of the interventional tool in the second frame of second medical image and based on the initial registration relationship corresponding to the first frame of second medical image. Merely by way of example, the initial registration relationship corresponding to the second frame of second medical image may be obtained by updating, based on the registration operation performed on the second frame of second medical image, the initial registration relationship corresponding to the first frame of second medical image. For example, a registration relationship may be obtained by performing the registration operation on the target centerline and the centerline of the interventional tool in the second frame of second medical image. Further, the registration relationship may be combined with the initial registration relationship corresponding to the first frame of second medical image to obtain the initial registration relationship corresponding to the second frame of second medical image. In such cases, the initial registration relationship corresponding to a current frame of second medical image may be determined iteratively.

In some embodiments, the initial registration relationship may be directly obtained based on the pre-registration relationship and the registration operation performed on the target centerline and the centerline of the interventional tool. For example, for the first frame of second medical image, the processing device 140 may perform the pre-registration operation on the first medical image and the first frame of second medical image to obtain the pre-registration relationship. Further, for any current frame of second medical image, the processing device 140 may determine the initial registration relationship corresponding to the current frame of second medical image by performing the registration operation and based on the pre-registration relationship. Merely by way of example, the initial registration relationship corresponding to the current frame of second medical image may be obtained by updating, based on the registration operation performed on the current frame of second medical image, the pre-registration relationship. For example, a registration relationship may be obtained by performing the registration operation on the target centerline and the centerline of the interventional tool in the second frame of second medical image. Further, the registration relationship may be combined with the pre-registration relationship to obtain the initial registration relationship corresponding to the second frame of second medical image.

In some embodiments, the registration operation may be configured to align the target centerline with the centerline of the interventional tool. In some embodiments, the registration operation may be performed based on a rigid registration algorithm, a deformation registration algorithm, etc. In the rigid registration algorithm, a distance between each point on the target centerline and a corresponding point on the centerline of the interventional tool may be determined. Further, the target centerline may be translated to the centerline of the interventional tool based on the distance. In such cases, the initial registration relationship may be used to translate the target centerline such that the target centerline may be aligned with the centerline of the interventional tool. In the deformation registration algorithm, the target centerline (and the blood vessels in the first medical image) may be deformed and rendered to match the centerline of the interventional tool.

According to some embodiments of the present disclosure, centerlines of the blood vessels may be projected on the plane corresponding to the second medical image, such that the 3D blood vessels may be superimposed on the 2D medical image in the surgery, thereby improving the accuracy of image registration.

FIG. 6 is a flowchart illustrating an exemplary process 600 for determining a first motion state of the blood vessels according to some embodiments of the present disclosure. In some embodiments, operation 330 in process 300 may be performed based on process 600. In some embodiments, the process 600 may be performed by the determination module 220 of the processing device 140.

In 610, the processing device 140 may obtain a mapping relationship between physiological phases and blood vessel motion states.

The mapping relationship refers to a correspondence between physiological phases in a physiological cycle of a physiological motion (e.g., the first physiological motion) and the motion states of the blood vessels along with the physiological motion. In the mapping relationship, each physiological phase may correspond to a motion state of the blood vessels. In some embodiments, the motion state of the blood vessels includes a motion of the blood vessels in a physiological phase relative to a previous physiological phase. In such cases, the mapping relationship indicates a motion of the blood vessels in each physiological phase in the physiological cycle relative to its previous physiological phase.

In some embodiment, the mapping relationship may be determined based on sample data obtained before the surgery. For example, the processing device 140 may obtain sample medical images of the target subject and a sample physiological feature corresponding to each sample medical image, determine relative motions of the blood vessels between pairs of adjacent sample medical images among the sample medical images, and determine the mapping relationship based on the sample physiological feature and the relative motions of the blood vessels. More descriptions regarding the determining the mapping relationship may be found elsewhere in the present disclosure. See, e.g., FIG. 7 and relevant descriptions thereof.

In 620, the processing device 140 may determine the first motion state of the blood vessels based on the first physiological feature and the mapping relationship.

In some embodiments, the processing device 140 may determine a physiological phase corresponding to the first physiological feature. Further, the processing device 140 may determine the first motion state based on the physiological phase and the mapping relationship. Merely by way of example, the mapping relationship may be in a form of a chart. The processing device 140 may query the chart to determine a target physiological phase in the chart that matches the physiological phase, and determine a motion state corresponding to the target physiological phase as the first motion state.

According to some embodiments of the present disclosure, the mapping relationship may be obtained, and the first motion state corresponding to the first physiological feature may be determined based on the mapping relationship, which effectively improve the accuracy of determining the first motion state. In addition, the obtaining first motion state based on the mapping relationship requires a small amount of calculation, which ensures a high-efficiency determination process of the first motion state, thereby improving the accuracy and efficiency of image registration.

FIG. 7 is a flowchart illustrating an exemplary process 700 for determining a mapping relationship between physiological phases and blood vessel motion states according to some embodiments of the present disclosure. In some embodiments, operation 610 in process 600 may be performed based on process 700. In some embodiments, the process 700 may be performed by the determination module 220 of the processing device 140.

In 710, the processing device 140 may obtain sample medical images of the target subject and a sample physiological feature corresponding to each sample medical image.

The sample medical images may be collected sequentially over at least one physiological cycle of the first physiological motion. The sample physiological feature corresponding to each sample medical image may be collected synchronously with the sample medical image. Taking the respiratory motion as an example, a respiratory cycle refers to a complete exhalation and inhalation process. The sample medical images may be collected sequentially over a preset count of respiratory cycles. Merely by way of example, the preset count may be 1, 3, etc. In some embodiments, sample medical images over multiple respiratory cycles may be collected and used to determine a mapping relationship. In such cases, the mapping relationship may include relationship corresponding to at least one complete respiratory cycle. Moreover, the blood vessel motion state corresponding to each physiological phase may be determined based on the multiple respiratory cycles, which may improve the accuracy of the mapping relationship.

In some embodiments, the sample medical images may indicate the blood vessels of the target subject. For example, the sample medical images may include angiography images collected based on an angiography technique. Each of sample medical image may include information related to the blood vessels of the target subject. In some embodiments, the sample medical images may include fluoroscopy images. The fluoroscopy images may indicate position information of the target portion (e.g., the liver) in which the blood vessels are located. A change in the position information of the target portion may be used to indicate a motion state of the blood vessels. In some embodiments, the sample medical images may be collected before the surgery. In some embodiments, the sample medical images may be 3D images or 2D images.

The sample physiological feature refers to a feature related to the first physiological motion at the acquisition time of the sample medical image. The sample physiological feature may be similar to the first physiological feature. In some embodiments, each sample medical image may correspond to one physiological phase. Since the sample medical images are collected over at least one physiological cycle, at least one sample medical image and at least one sample physiological feature corresponding to each physiological phase may be collected.

In 720, the processing device 140 may determine relative motions of the blood vessels between pairs of adjacent sample medical images among the sample medical images.

The pair of adjacent sample medical images refer to a current frame and an adjacent previous frame in the sequentially collected sample medical images. For example, a current frame refers to the sample medical image in the nth frame, and the adjacent previous frame refers to the sample medical image in the (n-1)th frame. Alternatively, the adjacent sample medical images may refer to two sample medical images with a preset frame interval. For example, the preset frame interval may be 3 frames. Correspondingly, the adjacent sample medical images may be the sample medical image in the nth frame and the sample medical image in the (n-3)th frame.

In some embodiments, to determine the relative motions of the blood vessels between the pairs of adjacent sample medical images, for each pair of adjacent sample medical images, the processing device 140 may determine position information of a region of interest (ROI) in each sample medical image in the pair. In some embodiments, the ROI may include the blood vessels in the sample medical image. For example, the sample medical image may include an angiography image collected before the surgery. The angiography image may be obtained by injecting a contrast agent into the blood vessels performing a scan on the target subject to obtain an image indicating the blood vessels. Regions including the contrast agent in the angiography image may be extracted based on an image processing (e.g., using a machine learning model) as the ROI. In some embodiments, the ROI may include the target portion (e.g., the liver) in which the blood vessels are located. For example, the sample medical images may include a fluoroscopy image collected before the surgery. The fluoroscopy image may indicate position information of the target portion (e.g., the liver). Merely by way of example, an upper edge of the liver in the fluoroscopy image may be determined as the ROI. By using the fluoroscopy image as the sample medical image, the position information of the ROI may be obtained without injecting the contrast agent into the blood vessels, which can reduce or avoid damage to the target subject.

Further, the processing device 140 may determine the relative motion of the blood vessels based on the position information of the ROI in the sample medical images in the pair. For example, the processing device 140 may determine a difference between the position information of the ROIs in the sample medical images in the pair, and determine the difference between the position information as the relative motion of the blood vessels in the sample medical images in the pair. The relative motion of the blood vessels in the sample medical images in the pair may indicate a motion state of the blood vessels in a current frame of sample medical image (i.e., a current physiological phase) relative to the previous frame in the pair (i.e., a previous physiological phase).

In 730, the processing device 140 may determine the mapping relationship based on the sample physiological feature and the relative motion of the blood vessels.

In some embodiments, for each physiological phase (also referred to as a target physiological phase) in the at least one physiological cycle, the processing device 140 may select, from the sample medical images, one or more sample medical images corresponding to the target physiological phase based on the sample physiological feature corresponding to each sample medical image. For example, the sample physiological feature may be a physiological phase. The processing device 140 may select the one or more sample medical images directly based on the sample physiological feature. Merely by way of example, one or more sample medical images corresponding to the sample physiological feature same as the target physiological phase may be determined as the one or more sample medical images corresponding to the target physiological phase. As another example, the sample physiological feature may be a physiological amplitude. The processing device 140 may determine a physiological phase of each sample medical image based on the physiological amplitude of the sample medical image. Further, the processing device 140 may select the one or more sample medical images based on the physiological phase of each sample medical image. Merely by way of example, one or more sample medical images corresponding to the physiological phase same as the target physiological phase may be determined as the one or more sample medical images corresponding to the target physiological phase.

Further, the processing device 140 may determine the blood vessel motion state corresponding to the physiological phase based on the relative motions corresponding to the one or more selected sample medical images. For example, the one or more selected sample medical images may include one sample medical image, and the processing device 140 may determine the relative motion corresponding to the one sample medical image as the blood vessel motion state corresponding to the physiological phase. As another example, the one or more selected sample medical images may include two or more sample medical images, and the processing device 140 may determine an average of the relative motions corresponding to the two or more sample medical images as the blood vessel motion state corresponding to the physiological phase.

Further, the processing device 140 may determine the mapping relationship based on the blood vessel motion state corresponding to each physiological phase. For example, the processing device 140 may make a one-to-one correspondence between the blood vessel motion state and the physiological phase to obtain the mapping relationship.

It should be noted that the above description of the process 700 is merely provided for the purposes of illustration, and not intended to limit the scope of the present disclosure. For persons having ordinary skills in the art, multiple variations or modifications may be made under the teachings of the present disclosure. However, those variations and modifications do not depart from the scope of the present disclosure.

In some embodiments, the mapping relationship may be determined based on sample medical images of a sample subject different from the target subject. The sample medical images may be collected sequentially over at least one physiological cycle and indicating blood vessels of the sample subject. For example, the sample subject may be a subject who has received a historical scan. The historical scan data may be stored and used as sample medical images for determining the mapping relationship corresponding to the target subject. Merely by way of example, the historical scan data of a plurality of subjects different from the target subject may be stored in a storage device. The processing device may select the sample subject from the plurality of subjects based on a similarity between the target subject and each of the plurality of subjects. The similarity may include a similarity in gender, age, height, weight, disease type, etc. Then the historical scan data of the selected subject may be used as the sample medical images for determining the mapping relationship corresponding to the target subject.

FIG. 8 is a flowchart illustrating an exemplary process 800 for determining a first motion state of the blood vessels according to some embodiments of the present disclosure. In some embodiments, operation 330 in process 300 may be performed based on process 800. In some embodiments, the process 800 may be performed by the determination module 220 of the processing device 140.

In 810, the processing device 140 may obtain a first physiological curve of the target subject in a pre-scan and sample medical images of the target subject collected sequentially over multiple physiological cycles in the pre-scan.

The pre-scan refers to a scan performed before the surgery. The pre-scan may be performed over multiple physiological cycles such that sample medical images of the target subject may be collected sequentially over the multiple physiological cycles. The first physiological curve refers to a signal curve corresponding to the first physiological motion of the target subject in the pre-scan. In some embodiments, the physiological signal of the target subject may be collected synchronously with the sample medical images. Further, the first physiological curve may be generated based on the physiological signal. In such cases, the first physiological curve may be a curve over the multiple physiological cycles. In some embodiments, the processing device 140 may obtain the physiological signal and generate the first physiological curve based on the physiological signal. In some embodiments, the first physiological curve may be generated by a motion signal detector (e.g., a respiratory detector), and the processing device 140 may obtain the first physiological curve from the motion signal detector.

In 820, the processing device 140 may obtain a second physiological curve of the target subject during a period including the acquisition time of the second medical image.

The second physiological curve refers to a signal curve corresponding to the physiological motion of the target subject in the period including the acquisition time of the second medical image. The period including the acquisition time of the second medical image refers to a time period with a preset duration. For example, the preset duration includes 5 seconds before and after the acquisition time of the second medical image. In some embodiments, in the surgery, the physiological signal of the target subject may be collected synchronously with the second medical images. Further, the second physiological curve may be generated based on the physiological signal. In some embodiments, the processing device 140 may obtain a portion of the physiological signal that is in the period including the acquisition time of the second medical image and generate the second physiological curve based on the portion of the physiological signal. In some embodiments, the physiological curve corresponding to the physiological signal may be generated by a motion signal detector, and the processing device 140 may obtain a portion of the physiological curve in the period including the acquisition time of the second medical image as the second physiological curve.

In 830, the processing device 140 may identify a target portion in the first physiological curve that matches the second physiological curve.

In some embodiments, the processing device 140 may identify a portion of the first physiological curve that has the highest overlap with the second physiological curve as the target portion. For example, the highest overlap refers to that the portion of the first physiological curve has the smallest difference from the second physiological curve, the closest change trend to the second physiological curve, etc.

In 840, the processing device 140 may determine the first motion state based on the sample medical images corresponding to the target portion in the first physiological curve.

In some embodiments, to determine the first motion state, the processing device 140 may obtain a mapping relationship between physiological phases and blood vessel motion states based on the sample medical images corresponding to the target portion in the first physiological curve. In some embodiments, the determination of the mapping relationship based on the sample medical images corresponding to the target portion in the first physiological curve may be performed in a similar manner as described in process 700, which is not repeated here. Further, the processing device 140 may determine the first motion state based on the first physiological feature and the mapping relationship.

In some occasions, the target subject is not be able to maintain a stable physiological motion during the surgery, the physiological motion in a period including the acquisition time of the second medical image may be different from the physiological motion in a single respiratory cycle before the surgery. According to some embodiments of the present disclosure, by introducing the first physiological curve over multiple physiological cycles, a target portion that matches the second physiological curve can be obtained. The physiological motion in the target portion may be most consistent with the physiological motion in the period including the acquisition time of the second medical image. Further, the sample medical images corresponding to the target portion may be used to determine the first motion state, which improves the accuracy of the first motion state.

FIG. 9 is a flowchart illustrating an exemplary process 900 for determining a target registration relationship between a first medical image and a second medical image according to some embodiments of the present disclosure. In some embodiments, operation 340 in process 300 may be performed based on process 900. In some embodiments, the process 900 may be performed by the determination module 220 of the processing device 140.

In 910, the processing device 140 may generate a first auxiliary registration relationship between the first medical image and the second medical image based on the first motion state of the blood vessels.

The first auxiliary registration relationship refers to a registration relationship for registering the first medical image with the second medical image determined based on the first motion state of the blood vessels. In some embodiments, the first auxiliary registration relationship may be configured to registering a position of the blood vessels in the first medical image with a position of the blood vessels in the second medical image. For example, the position of the blood vessels in the first medical image may be represented by the centerlines of the blood vessels in the first medical image, and the position of the blood vessels in the second medical image may be represented by the centerline of the interventional tool in the second medical image. The first auxiliary registration may be configured to registering the centerlines of the blood vessels with the centerline of the interventional tool.

In some embodiments, the first motion state of the blood vessels at the acquisition time may indicate a motion (e.g., a position difference) of the blood vessels at the acquisition time (or a current physiological phase corresponding to the acquisition time) relative to the previous acquisition time of the previous frame of second medical image (or a previous physiological phase corresponding to the previous acquisition time). The first auxiliary registration relationship between the first medical image and the second medical image may be determined based on a target registration relationship corresponding to the previous acquisition time and the motion. The target registration relationship corresponding to the previous acquisition time refers to a registration relationship between the first medical image and the previous frame of second medical image corresponding to the previous acquisition time, which has been determined for the previous frame of second medical image. Since the target registration relationship of the previous frame of second medical image relative to the first medical image is known, the motion of the blood vessels at the current acquisition time relative to the previous acquisition time is known, the registration relationship between the current frame of second medical image and the first medical image (i.e., the first auxiliary registration relationship) can be estimated based on this known information.

Merely by way of example, the image registration may be performed on multiple second medical images collected in a continuous period in the surgery. For the first frame in the multiple second medical images, the processing device 140 may determine the initial registration relationship between the first medical image and the first frame. Since the first frame does not have a previous frame for determining the first motion state, the initial registration relationship may be determined as the target registration relationship between the first medical image and the first frame. Further, for a second frame in the multiple second medical images, the processing device 140 may determine the first motion state (e.g., based on the process 600) indicating a motion the blood vessels at a second acquisition time of the second frame relative to the first acquisition time of the first frame. Based on the first motion state and the target registration relationship between the first medical image and the first frame, the processing device 140 may determine the first auxiliary registration relationship between the first medical image and the second frame. For example, the first auxiliary registration relationship may be a sum of the first motion state and the target registration relationship between the first medical image and the first frame. Further, the processing device 140 may determine the target registration relationship between the first medical image and the second frame based on the initial registration relationship and the first auxiliary registration relationship. Furthermore, the processing device 140 may determine the first auxiliary registration relationship between the first medical image and the third frame based on the first motion state corresponding to third frame and the target registration relationship between the first medical image and the second frame. In such cases, for each current frame, the first auxiliary registration relationship may be determined based on the target registration relationship corresponding to the previous frame (or the previous acquisition time) and the first motion state corresponding to the current frame.

In some embodiments, the first auxiliary registration relationship between the first medical image and the second medical image may be determined based on the first motion state corresponding to each acquisition time. For example, the first auxiliary registration relationship between the first medical image and the current frame of second medical image may be a combination of the first motion state corresponding to the current frame and first motion states corresponding to all the previous frames.

In 920, the processing device 140 may determine a first weight for the initial registration relationship and a second weight for the first auxiliary registration relationship based on the second medical image.

In some embodiments, the processing device 140 may determine the first weight and the second weight based on based a segmentation result of the centerline of the interventional tool in the second medical image. For example, the processing device 140 may segment a centerline of the interventional tool in the second medical image to obtain a segmentation result. In some embodiments, the processing device 140 may segment the centerline of the interventional tool in a manner similar to operation 420 described in FIG. 4, which is not repeated here. Further, the processing device 140 may determine a first evaluation result of the segmentation result of the centerline of the interventional tool. Further, the processing device 140 may determine the first weight and the second weight based on the first evaluation result.

In some embodiments, the processing device 140 may determine the first evaluation result of the segmentation result based on an evaluation criterion. Exemplary evaluation criteria may include a continuity of the centerline of the interventional tool, a difference between two or more segments in the centerline of the interventional tool, a difference between the centerline of the interventional tool and a preset centerline of the interventional tool, a weighted result of two or more evaluation criteria, etc., or any combination thereof. The continuity of the centerline of the interventional tool refers to a continuity between points in the centerline of the interventional tool. The better the continuity of the centerline, the better the segmentation result. The difference between two or more segments in the centerline of the interventional tool refers to a difference of coordinates of points between two or more segments. For example, the centerline of the interventional tool may be divided into a plurality of segments. The processing device 140 may determine a difference of the coordinates of points in any two or more segments. Merely by way of example, the difference may be between coordinates of points in adjacent segments. The greater the difference between the two or more segments, the worse the segmentation result. The difference between the centerline of the interventional tool and a preset centerline of the interventional tool refers to a difference between the centerline of the current frame and the preset centerline of the interventional tool. The preset centerline of the interventional tool may include a predetermined centerline, or a centerline with a relatively good segmentation result in previous frames of second medical images. The greater the difference between the centerline and the preset centerline, the worse the segmentation result. The weighted result of two or more evaluation criteria refers to a combination of two or more of the above evaluation criteria, which may be obtained by performing a weighting operation on the segmentation results corresponding to the two or more evaluation criteria. Merely by way of example, the two or more evaluation criteria may include the continuity of the centerline of the interventional tool, a difference between two or more segments in the centerline (also referred to as a first difference), a difference between the centerline and the preset centerline (also referred to as a second difference). The processing device 140 may determine weights (e.g., 0.2, 0.6, 0.2) for the segmentation results of the continuity, the first difference, and second difference, respectively, and obtain the first evaluation result by performing the weighting operation on the segmentation results of the continuity, the first difference, and second difference based on the weights.

In some embodiments, the first evaluation result may be represented by a value within a preset range. For example, the preset range may be 0-1, within which a larger value indicates a better segmentation result. To determine the first weight and the second weight based on the first evaluation result, the processing device 140 may compare the first evaluation result with a preset evaluation threshold. When the first evaluation result is greater than or equal to the preset evaluation threshold, which indicates that the segmentation result of the centerline of the interventional tool in the second medical image is good, the processing device 140 may determine a relatively high first weight for the initial registration relationship determined based on the interventional tool, and correspondingly a relatively low second weight for the first auxiliary registration relationship determined based at least on the first motion state. For example, the first weight and the second weight are 0.6 and 0.4, respectively.

Alternatively or additionally, the processing device 140 may determine the first weight and the second weight by comparing the first evaluation result with preset evaluation ranges. For example, the preset evaluation ranges may at least include: a first evaluation range, a second evaluation range, and a third evaluation range. The first evaluation range may be [X1, X2) including values corresponding to a good segmentation result, where the value of X1 is smaller than the value of X2. The second evaluation range may be [X2, X3) including values corresponding to a medium segmentation result, where the value of X2 is smaller than the value of X3. The third evaluation range may be [X3, X4) including values corresponding to a poor segmentation result, where the value of X3 is smaller than the value of X4. The processing device 140 may compare the first evaluation result with the evaluation ranges. If the first evaluation result falls into the first evaluation range, which indicates that the segmentation result is good, the processing device 140 may determine a high first weight for the initial registration relationship. If the first evaluation result falls into the second evaluation range, which indicates that the segmentation result is average, the first weight for the initial registration relationship and the second weight for the first auxiliary registration relationship may have a small difference. For example, the first weight may be the same as the second weight. Correspondingly, the target registration relationship may be an average of the initial registration relationship and the first auxiliary registration relationship. If the first evaluation result falls into the third evaluation range, which indicates that the segmentation result is poor, the processing device 140 may determine a low first weight for the initial registration relationship. By introducing the preset evaluation ranges for determining the first weight and the second weight, the accuracy of the first weight and the second weight can be improved.

In some embodiments, the first weight and the second weight may be determined based on a physiological phase corresponding to the second medical image. Different phases in a physiological cycle may correspond to different amplitudes of physiological motions. For example, the amplitude of the respiratory motion at the 5th second in the respiratory cycle may be larger than the amplitude of the respiratory motion at the 3rd second in the respiratory cycle. The amplitude of the physiological motions may affect the artifacts in the second medical image, which may further affect the segmentation result of the centerline of the interventional tool in the second medical image. For example, there may be more artifacts in the second medical image collected at the 5th second. Correspondingly, the segmentation result of the centerline of the interventional tool in second medical image collected at the 5th second may be poor. In such cases, the processing device 140 may determine the physiological phase corresponding to the second medical image based on the first physiological feature. For example, the first physiological feature may be a physiological phase, and the processing device 140 may determine the first weight and the second weight based on the first physiological feature directly. As another example, the sample physiological feature may be a physiological amplitude. The processing device 140 may determine a physiological phase based on the physiological amplitude. Further, the processing device 140 may determine the first weight and the second weight based on the physiological phase. For example, for a physiological phase with a large amplitude of physiological motion, the processing device 140 may determine a low first weight for the initial registration relationship and a high second weight for the first auxiliary registration relationship, which can solve the problem that the accuracy of the image registration is affected by serious artifacts in the second medical image, thereby improving the accuracy of image registration.

In some embodiments, the first weight and the second weight may be determined based on a noise level in the second medical image. The noise level may affect the segmentation result of the centerline of the interventional tool in the second medical image. For example, the segmentation result of the centerline of the interventional tool in second medical image with high noise level may be poor. In such cases, the processing device 140 may determine a second evaluation result of the noise level in the second medical image. Further, the processing device 140 may determine the first weight and the second weight based on the second evaluation result. For example, if the a second evaluation result indicates that the noise level in the second medical image is high, the processing device 140 may determine a low first weight for the initial registration relationship and a high second weight for the first auxiliary registration relationship, which can solve the problem that the accuracy of the image registration is affected by high noise level in the second medical image, thereby improving the accuracy of image registration.

In some embodiments, the first weight and the second weight may be determined based on any combination of the first evaluation result, the physiological phase, and the second evaluation result. For example, the first weight and the second weight may be determined based on the first evaluation result and the physiological phase simultaneously. Merely by way of example, the processing device 140 may determine two initial first weights based on the first evaluation result and t the physiological phase, respectively. Further, the processing device 140 may determine an average weight of the initial first weights as the first weight.

In 930, the processing device 140 may determine the target registration relationship based on the first auxiliary registration relationship, the initial registration relationship, the first weight, and the second weight.

For example, the processing device 140 may determine the target registration relationship by performing a weighting operation on the initial registration relationship and the first auxiliary registration relationship based on the first weight and the second weight.

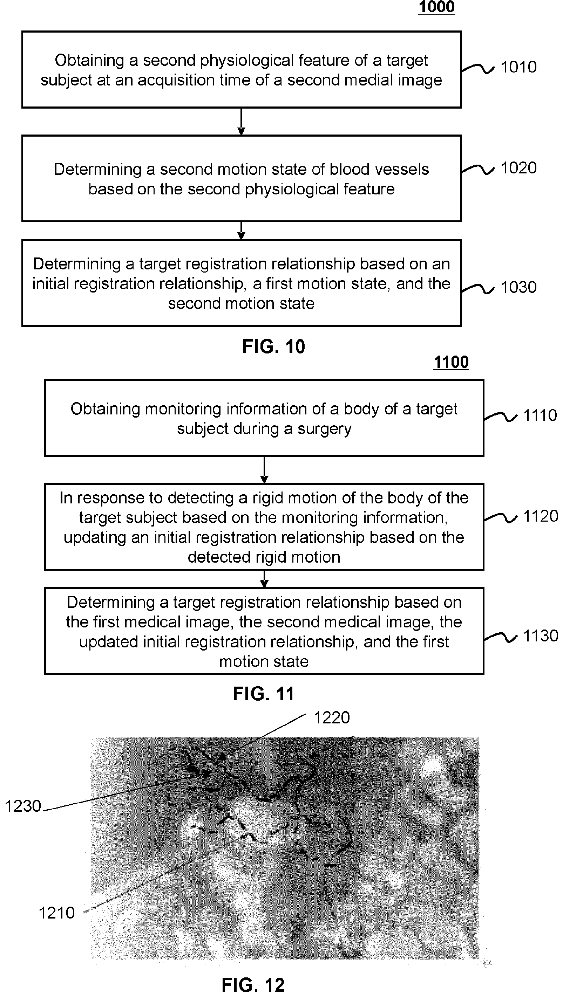

FIG. 10 is a flowchart illustrating another exemplary process 1000 for determining a target registration relationship between a first medical image and a second medical image according to some embodiments of the present disclosure. In some embodiments, operation 340 in process 300 may be performed based on process 1000. In some embodiments, the process 1000 may be performed by the determination module 220 of the processing device 140.

In 1010, the processing device 140 may obtain a second physiological feature of the target subject at the acquisition time of the second medial image.

The second physiological feature refers to a feature related to a second physiological motion of the target subject at the acquisition time of the second medical image. The second physiological motion may be different from the first physiological feature. For example, the first physiological motion may include the respiration motion, and the second physiological motion may include the cardiac motion. In some embodiments, second physiological motion features may be collected synchronously with the plurality of second medical images. In some embodiments, the plurality of second medical images are collected during the surgery, and each second medical image corresponds to one physiological phase of the second physiological motion.

In 1020, the processing device 140 may determine a second motion state of the blood vessels based on the second physiological feature.

The second motion state of the blood vessels refers to motion information of the blood vessels at the acquisition time (or the second physiological phase corresponding to the acquisition time). In some embodiments, to determine the second motion state, the processing device 140 may obtain a mapping relationship (also referred to as a second mapping relationship) between second physiological phases and blood vessel motion states. Further, the processing device 140 may determine a second motion state based on the second physiological feature and the second mapping relationship. In some embodiments, the second motion state may be determined in a manner similar to the process for determining the first motion state (See, e.g., FIG. 6 and relevant descriptions thereof), which is not repeated here.

In 1030, the processing device 140 may determine the target registration relationship based on the initial registration relationship, the first motion state, and the second motion state.

In some embodiments, to determine the target registration relationship, the processing device 140 may generate a second auxiliary registration relationship between the first medical image and the second medical image based on the second motion state of the blood vessels. The second auxiliary registration relationship refers to a registration relationship for registering the first medical image with the second medical image based on the second motion state of the blood vessels. For example, the second auxiliary registration relationship may be determined based on the target registration relationship corresponding to the previous acquisition time and the second motion state. As another example, the second auxiliary registration relationship may be determined based on the second motion state corresponding to each acquisition time. The second auxiliary registration relationship may be determined in a manner similar to the process for determining the first auxiliary registration relationship (See, e.g., FIG. 9 and relevant descriptions thereof), which is not repeated here.

Further, the processing device 140 may determine a third weight for the second auxiliary registration relationship. In some embodiments, the processing device 140 may determine the first weight, the second weight, and the third weight based on any combination of the first evaluation result, the physiological phase, and the second evaluation result as illustrated in FIG. 9. In some embodiments, the processing device 140 may determine the first weight, the second weight, and the third weight based on the motion type of the second physiological motion. For example, different motion types may have different effects on the position of the blood vessel. In such cases, the processing device 140 may determine different weights for different motion types. Merely by way of example, the first physiological feature may relate to the respiration motion, and the second physiological feature may relate to the cardiac motion. The effect of the cardiac motion on the position of the blood vessels may be smaller than that of the respiratory motion. Thus, the third weight for the second auxiliary registration relationship corresponding to the cardiac motion may be smaller than the second weight for the first auxiliary registration relationship corresponding to the respiration motion.

Further, the processing device 140 may generate the target registration relationship by performing a weighting operation on the initial registration relationship, the first auxiliary registration relationship, and the second auxiliary registration relationship based on the first weight, the second weight, and the third weight.

According to some embodiments of the present disclosure, by introducing the second motion state, the target registration relationship can be generated further based on another physiological motion, which can balance the effects of different types of physiological motions on the position of the blood vessels, thereby improving the accuracy of image registration.

FIG. 11 is a flowchart illustrating another exemplary process 1100 for determining a target registration relationship between a first medical image and a second medical image according to some embodiments of the present disclosure. In some embodiments, operation 340 in process 300 may be performed based on process 1100. In some embodiments, the process 1100 may be performed by the determination module 220 of the processing device 140.

In 1110, the processing device 140 may obtain monitoring information of the body of the target subject during the surgery.

In some embodiments, the monitoring information may be collected via a monitoring device. Exemplary monitoring devices may include a radar, a camera, etc. For example, the monitoring device may be placed near (e.g., above) the body of the target subject to collect the monitoring information. Then the processing device 140 may may obtain the monitoring information from the monitoring device. In some embodiments, the monitoring information may include positioning information of the target subject. For example, the positioning information may be determined based on mechanical data corresponding to structures such as a table on which the target subject is located. The processing device 140 may obtain mechanical data from the structures and determine the monitoring information based on the mechanical data.

In 1120, in response to detecting a rigid motion of the body of the target subject based on the monitoring information, the processing device 140 may update the initial registration relationship based on the detected rigid motion.

The rigid motion refers to a motion of the body of the target subject, for example, a motion of the body of the target subject caused by moving the table, a posture change of the target subject, etc. In some embodiments, the rigid motion indicates significant change in the position of the body of the target subject, which also causes the relative position of the first medical image and the second medical image to change in spatial. In such cases, the pre-registration relationship obtained based on the second medical image before the rigid motion cannot be used to determine the initial registration relationship after the rigid motion. Therefore, the processing device 140 may update the initial registration relationship based on the detected rigid motion.

In some embodiments, to update the initial registration relationship, the processing device 140 may perform a pre-registration operation on the first medical image and the second medical image after the rigid motion to obtain an updated pre-registration relationship. The pre-registration operation may be performed in a manner similar to the process for obtaining the pre-registration relationship as described in operation 530, which is not repeated here. Alternatively, the processing device 140 may obtain an updated pre-registration relationship by updating the pre-registration relationship based on data relating to the rigid motion. Further, the processing device 140 may obtain an updated initial registration relationship based on the updated pre-registration relationship. For example, the processing device 140 may update the initial registration relationship based on the updated pre-registration relationship to obtain the updated initial registration relationship. As another example, the processing device 140 may perform a registration operation on the target centerline and the centerline of the interventional tool, and generate an updated initial registration relationship based on the registration operation and the updated pre-registration relationship. The generating the updated initial registration relationship based on the updated pre-registration relationship and the registration operation may be performed in a manner similar to the process for determining the initial registration relationship as described in operation 530, which are not repeated here.

In 1130, the processing device 140 may determine the target registration relationship based on the updated initial registration relationship and the first motion state.

In some embodiments, to determine the target registration relationship, the processing device 140 may generate the first auxiliary registration relationship based on the first motion state. Further, the processing device 140 may determine the first weight for the updated initial registration relationship and the second weight for the first auxiliary registration relationship. Further, the processing device 140 may determine the target registration relationship by performing a weighting operation on the updated initial registration relationship and the first auxiliary registration relationship based on the first weight and the second weight. The determining the target registration relationship based on the updated initial registration relationship and the first motion state may be performed in a manner similar to the process for determining the target registration relationship based on the initial registration relationship and the first motion state as described in process 900 or process 1000, which is not repeated here.

It should be noted that the above description of the process 1100 is merely provided for the purposes of illustration, and not intended to limit the scope of the present disclosure. For persons having ordinary skills in the art, multiple variations or modifications may be made under the teachings of the present disclosure. However, those variations and modifications do not depart from the scope of the present disclosure. In some embodiments, operation 1120 and operation 1130 can be omitted. In in response to detecting the rigid motion, the processing device 140 may update the target registration relationship directly based on data relating to the rigid motion. For example, the processing device 140 may modify the initial registration relationship by modifying the pre-registration relationship based on the data relating to the rigid motion. In such cases, the target registration relationship may be updated based on the modified initial registration relationship.

According to some embodiments of the present disclosure, the rigid motion may be monitored and used to determine or update the target registration relationship, which can reduce or avoid the impact of the rigid motion on the registration result, thereby improving the accuracy of image registration.

FIG. 12 is a schematic diagram illustrating a second medical image including projections of a target centerline according to some embodiments of the present disclosure.

As shown in FIG. 12, the second medical image includes an interventional tool 1230 in the target subject. The dotted line denotes a projection 1210 of the target centerline before the image registration based on the target registration relationship, and the solid line denotes a projection 1220 of the target centerline after the image registration. According to FIG. 12, the projection 1220 matches the position of the interventional tool 1230 better than the projection 1210. Thus, the accuracy of the image registration is improved based on the target registration relationship.

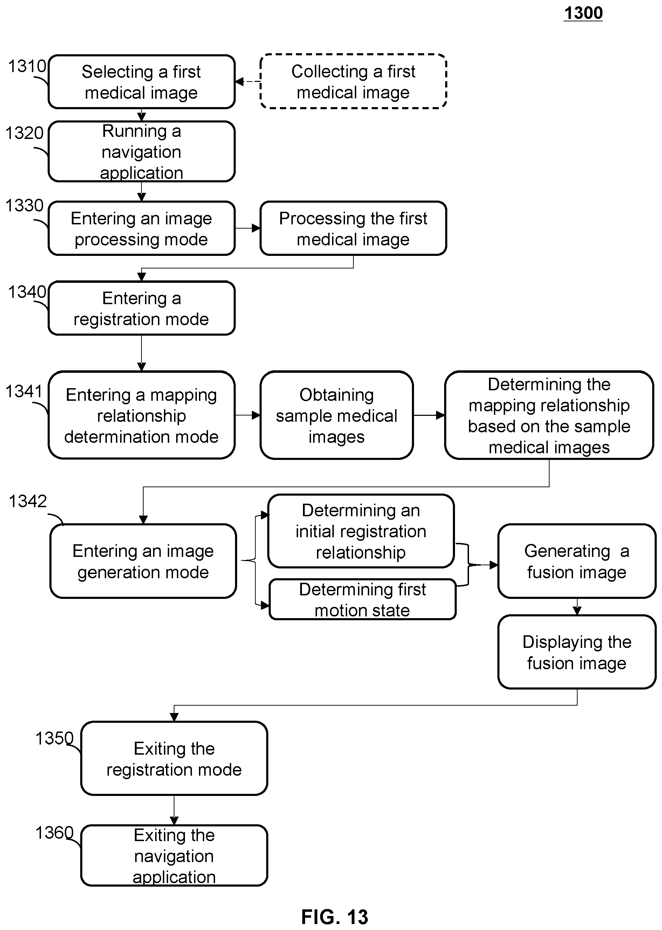

FIG. 13 is a flowchart illustrating an image registration process 1300 according to some embodiments of the present disclosure. In some embodiments, the process 1300 may be performed by the processing device 140.

In 1310, the processing device 140 may obtain a first medical image.

In some embodiments, the first medical image may be obtained from a medical imaging device (e.g., the medical imaging device 110). For example, to obtain the first medical image, the medical imaging device may be caused to collect the first medical image. Further, the first medical image may be obtained from the medical imaging device. In some embodiments, the first medical image may be stored in a storage device as historical data relating the target subject. Then the first medical image may be selected from the storage device.

In 1320, the processing device 140 may run a navigation application.

The navigation application may be used to provide navigation information for the user. For example, the navigation information may include information indicating an image processing mode, a registration mode, a mapping relationship determination mode, an image generation mode, etc. In some embodiments, the processing device 140 may run the navigation application automatically in response to obtaining the first medical image. In some embodiments, the processing device 140 may run the navigation application based on a user instruction. For example, the navigation application may be displayed on a screen of the terminal device. The user may select the navigation application on the screen to enter navigation.

In 1330, the processing device 140 may enter an image processing mode.

In the image processing mode, the first medical image may be processed. For example, centerlines of the blood vessels in the first medical image may be obtained. More descriptions regarding the obtaining the centerlines of the blood vessels in the first medical image may be found elsewhere in the present disclosure. See, e.g., operation 410 and relevant descriptions thereof.

In 1340, the processing device 140 may enter a registration mode.

In the registration mode, the processing device 140 may perform the following operations to achieve image registration during surgery.

In 1341, the processing device 140 may enter a mapping relationship determination mode.

In the mapping relationship determination mode, a user may select a manner for generating the mapping relationship between physiological phases and blood vessel motion states. Exemplary manners may include generating the mapping relationship based on angiography images or generating the mapping relationship based on fluoroscopy images. For example, the mapping relationship may be generated based on sample medical images. The sample medical images may include angiography images or fluoroscopy images. If the sample medical images are angiography images, the mapping relationship may be generated based on the position of the blood vessels in the angiography images. If the sample medical images are fluoroscopy images, the mapping relationship may be generated based on edge information of the target portion including the blood vessels (e.g., the upper edge of the liver) in the fluoroscopy image.

In some embodiments, the sample medical images may be collected during the surgery. For example, real-time images collected at the beginning of the surgery may be used to determine the mapping relationship. After the mapping relationship is determined, subsequent real-time images may serve as second medical images, and surgery navigation may be performed based on the second medical images and the mapping relationship. More descriptions regarding generating the mapping relationship may be found elsewhere in the present disclosure. See, e.g., FIG. 7 and relevant descriptions thereof.

In 1342, the processing device 140 may enter an image generation mode.

In the image generation mode, a second medical image and the first physiological feature of the target subject at an acquisition time of the second medical image may be obtained, and a fusion image may be generated and displayed. For example, an initial registration relationship between the first medical image and the second medical image may be obtained, and a first motion state of the blood vessels at the acquisition time of the second medical image may be determined based on the mapping relationship. Further, a target registration relationship between the first medical image and the second medical image may be generated based on the initial registration relationship and the first motion state. The fusion image may be generated based on the target registration relationship. More descriptions regarding generating the target registration relationship may be found elsewhere in the present disclosure. See, e.g., FIGs. 9-11 and relevant descriptions thereof.

In 1350, the processing device 140 may exit the registration mode.

After the fusion image is obtained, the processing device 140 may exit the registration mode.

In 1360, the processing device 140 may exit the navigation application.

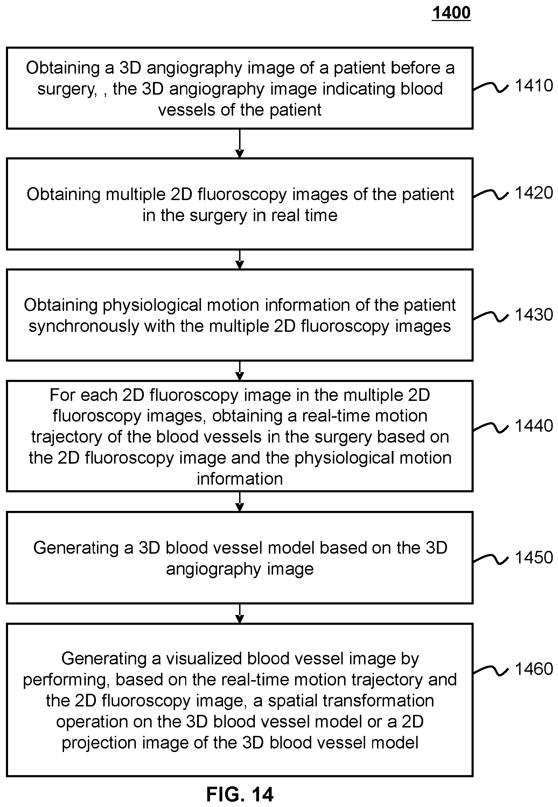

FIG. 14 is a flowchart illustrating a process 1400 for visualizing blood vessels according to some embodiments of the present disclosure. In some embodiments, the process 1400 may be performed by the processing device 140.

In 1410, the processing device 140 may obtain a 3D angiography image (also referred to as a first medical image) of a patient (also referred to as a target subject).

In some embodiments, the 3D angiography image may be obtained before a surgery. In some embodiments, the 3D angiography image may indicate blood vessels of the patient. In some embodiments, the blood vessels of the patient indicated by the 3D angiography image refer to blood vessels in a target portion (e.g., the liver) of the target subject on which an interventional surgery is performed. For example, the blood vessels may include a vascular tree composed of blood vessels (hepatic arteries, coronary arteries, etc.) in the target portion.

In 1420, the processing device 140 may obtain multiple 2D fluoroscopy images (also referred to as second medical images) of the patient in the surgery in real time.

In some embodiments, in the surgery performed on the patient, multiple 2D fluoroscopy images may be collected in real time. Each 2D fluoroscopy image may indicate an interventional tool in the patient.

More descriptions regarding the obtaining the 3D angiography image and/or the 2D fluoroscopy images may be found elsewhere in the present disclosure. See, e.g., operation 310 and relevant descriptions thereof.

In 1430, the processing device 140 may obtain physiological motion information of the patient synchronously with the multiple 2D fluoroscopy images.

In some embodiments, the physiological motion information may be or include a physiological signal of a physiological motion. The physiological signal may be collected synchronously with the multiple 2D fluoroscopy images. In some embodiments, the physiological signal may include physiological motion features (also referred to as first physiological motion features) of the patient. Each 2D fluoroscopy image corresponds to one physiological motion feature (e.g., physiological phase) of the physiological motion.

In 1440, for each 2D fluoroscopy image in the multiple 2D fluoroscopy images, the processing device 140 may obtain a real-time motion trajectory (also referred to as a first motion state) of the blood vessels in the surgery based on the 2D fluoroscopy image and the physiological motion information.

For example, for each 2D fluoroscopy image, the processing device 140 may determine a physiological feature (e.g., a physiological phase) corresponding to the 2D fluoroscopy image based on the physiological motion information. Further, the processing device 140 may obtain a mapping relationship between physiological phases and blood vessel motion states, and determine the real-time motion trajectory of the blood vessels based on the physiological feature and the mapping relationship. More descriptions regarding the obtaining the real-time motion trajectory may be found elsewhere in the present disclosure. See, e.g., FIG.6 and relevant descriptions thereof.

In 1450, the processing device 140 may generate a 3D blood vessel model based on the 3D angiography image.

In some embodiments, the 3D blood vessel model refers to a model (e.g., a 3D model) including a combination of blood vessels in the target portion of the patient. For example, the 3D blood vessel model may include a vascular tree composed of blood vessels (hepatic arteries, coronary arteries, etc.) in the target portion. In some embodiments, the processing device 140 may generate the 3D blood vessel model using an image segmentation model. For example, the processing device 140 may input the 3D angiography image the image segmentation model such that the image segmentation model may output the 3D blood vessel model in the 3D angiography image. In some embodiments, the processing device 140 may generate a blood vessel mask by segmenting the blood vessels from the first medical image, and then obtain the 3D blood vessel model based on the blood vessel mask. For example, the blood vessel mask may be obtained as the 3D blood vessel model. In some embodiments, since the 3D angiography image includes 3D information of the blood vessels in the target portion, the processing device 140 may use the 3D angiography image as the 3D blood vessel model directly.

In 1460, the processing device 140 may generate a visualized blood vessel image (also referred to as a fusion image) by performing, based on the real-time motion trajectory and the 2D fluoroscopy image, a spatial transformation operation on the 3D blood vessel model or a 2D projection image of the 3D blood vessel model.

In some embodiments, to generate the visualized blood vessel image, the processing device 140 may determine an initial registration relationship between the 3D angiography image and the 2D fluoroscopy image, generate a first auxiliary registration relationship between the 3D angiography image and the 2D fluoroscopy image based on the real-time motion trajectory of the blood vessels, determine a target registration relationship based at least on the first auxiliary registration relationship and the initial registration relationship, and perform the spatial transformation operation on the 3D blood vessel model or a 2D projection image based on the target registration relationship. More descriptions regarding the obtaining the target registration relationship may be found elsewhere in the present disclosure. See, e.g., FIG. 9-FIG.11 and relevant descriptions thereof.

The 2D projection image refers to projection data of the 3D blood vessel model or the blood vessels on a plane corresponding to the 2D fluoroscopy image. The target registration relationship is used to registering the 3D blood vessel model or the 2D projection image with the 2D fluoroscopy image such that the blood vessels in the registered 3D blood vessel model or the registered 2D projection image are consistent with the 2D fluoroscopy image. In such cases, the 3D blood vessel model or the 2D projection thereof is registered and fused with the 2D fluoroscopy image such that the visualized blood vessel image indicating the interventional tool in the blood vessels may be obtained. That is, the blood vessels (e.g., in form of 3D blood vessel model or 2D projection image) are visualized in the 2D fluoroscopy image indicating the interventional tool, which may provide timely guidance for an operator of the interventional tool.

Having thus described the basic concepts, it may be rather apparent to those skilled in the art after reading this detailed disclosure that the foregoing detailed disclosure is intended to be presented by way of example only and is not limiting.

Moreover, certain terminology has been used to describe embodiments of the present disclosure. For example, the terms "one embodiment," "an embodiment," and/or "some embodiments" mean that a particular feature, structure, or characteristic described in connection with the embodiment is included in at least one embodiment of the present disclosure. Therefore, it is emphasized and should be appreciated that two or more references to "an embodiment" or "one embodiment" or "an alternative embodiment" in various portions of this disclosure are not necessarily all referring to the same embodiment. Furthermore, the particular features, structures, or characteristics may be combined as suitable in one or more embodiments of the present disclosure.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various inventive embodiments. This method of disclosure, however, is not to be interpreted as reflecting an intention that the claimed subject matter requires more features than are expressly recited in each claim. Rather, inventive embodiments lie in less than all features of a single foregoing disclosed embodiment.

In some embodiments, the numbers expressing quantities or properties used to describe and claim certain embodiments of the application are to be understood as being modified in some instances by the term "about," "approximate," or "substantially." For example, "about," "approximate," or "substantially" may indicate ±20% variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the application are approximations, the numerical values set forth in the specific examples are reported as precisely as practicable.

## Claims

1. A method for image registration, implemented on a computing device having at least one storage device (150) storing a set of instructions, and at least one processor in communication with the at least one storage device (150), the method comprising:
obtaining a first medical image and a second medical image of a target subject, the first medical image indicating blood vessels of the target subject, the second medical image indicating an interventional tool in the target subject;
determining an initial registration relationship between the first medical image and the second medical image;
determining, based on a first physiological feature of the target subject at an acquisition time of the second medical image, a first motion state of the blood vessels at the acquisition time; and
determining a target registration relationship between the first medical image and the second medical image based on the initial registration relationship and the first motion state of the blood vessels,
**characterized in that**,
the determining a target registration relationship based on the initial registration relationship and the first motion state of the blood vessels includes:
generating a first auxiliary registration relationship between the first medical image and the second medical image based on the first motion state of the blood vessels;
determining a first weight for the initial registration relationship and a second weight for the first auxiliary registration relationship based on the second medical image;
determining the target registration relationship based on the first auxiliary registration relationship, the initial registration relationship, the first weight, and the second weight.

2. The method of claim 1, wherein the first medical image includes an angiography image collected before a surgery, and the second medical image includes a fluoroscopy image collected in the surgery.

3. The method of claim 1 or 2, wherein the determining an initial registration relationship between the first medical image and the second medical image includes:
determining centerlines of the blood vessels in the first medical image;
determining a centerline of the interventional tool in the second medical image; and
determining the initial registration relationship based on the centerlines of the blood vessels and the centerline of the interventional tool.

4. The method of claim 3, wherein the determining the initial registration relationship based on the centerlines of the blood vessels and the centerline of the interventional tool includes:
obtaining projection data of the centerlines of the blood vessels by projecting the centerlines to a plane corresponding to the second medical image;
determining a target centerline that matches the centerline of the interventional tool based on the projection data of the centerlines; and
determining the initial registration relationship by performing a registration operation on the target centerline and the centerline of the interventional tool.

5. The method of any one of claims 1-4, wherein the determining a first motion state of the blood vessels at the acquisition time includes:
obtaining a mapping relationship between physiological phases and blood vessel motion states; and
determining the first motion state of the blood vessels based on the first physiological feature and the mapping relationship.

6. The method of claim 5, wherein the mapping relationship is determined by:
obtaining sample medical images of the target subject and a sample physiological feature corresponding to each sample medical image, the sample medical images being collected sequentially over at least one physiological cycle and indicating the blood vessels of the target subject;
determining relative motions of the blood vessels between pairs of adjacent sample medical images among the sample medical images; and
determining the mapping relationship based on the sample physiological feature and the relative motions of the blood vessels.

7. The method of claim 6, wherein the determining relative motions of the blood vessels between pairs of adjacent sample medical images among the sample medical images includes:
for each pair of adjacent sample medical images,
determining position information of a region of interest (ROI) in each sample medical image in the pair; and
determining the relative motion of the blood vessels based on the position information of the ROI in the sample medical images in the pair.

8. The method of claim 6 or 7, wherein the determining the mapping relationship based on the sample physiological feature and the relative motions of the blood vessels includes:
for each physiological phase in the at least one physiological cycle,
selecting, from the sample medical images, one or more sample medical images corresponding to the physiological phase based on the sample physiological feature corresponding to each sample medical image;
determining the blood vessel motion state corresponding to the physiological phase based on the relative motions corresponding to the one or more selected sample medical images; and
determining the mapping relationship based on the blood vessel motion state corresponding to each physiological phase.

9. The method of claim 1, wherein the determining a first weight for the initial registration relationship and a second weight for the first auxiliary registration relationship based on the second medical image includes:
segmenting a centerline of the interventional tool in the second medical image;
determining a first evaluation result of a segmentation result of the centerline of the interventional tool; and
determining the first weight and the second weight based on the first evaluation result.

10. The method of any one of claims 1-9, wherein the determining a target registration relationship comprises:
obtaining a second physiological feature of the target subject at the acquisition time of the second medial image;
determining a second motion state of the blood vessels based on the second physiological feature; and
determining the target registration relationship based on the initial registration relationship, the first motion state, and the second motion state.

11. The method of any one of claims 1-10, wherein the second medical image is collected during a surgery, and the determining the target registration relationship comprises:
obtaining monitoring information of the body of the target subject during the surgery;
in response to detecting a rigid motion of the body of the target subject based on the monitoring information, updating the initial registration relationship based on the detected rigid motion;
determining the target registration relationship based on the updated initial registration relationship and the first motion state.

12. The method of any one of claims 1-11, wherein the determining a first motion state comprises:
obtaining a first physiological curve of the target subject in a pre-scan and sample medical images of the target subject collected sequentially over multiple physiological cycles in the pre-scan;
obtaining a second physiological curve of the target subject during a period including the acquisition time of the second medical image;
identifying a target portion in the first physiological curve that matches the second physiological curve; and
determining the first motion state based on the sample medical images corresponding to the target portion in the first physiological curve.

13. A system (100) for image registration, comprising:
at least one storage device (150) including a set of instructions; and
at least one processor configured to communicate with the at least one storage device (150), wherein when executing the set of instructions, the at least one processor is configured to direct the system (100) to perform operations including:
obtaining a first medical image and a second medical image of a target subject, the first medical image indicating blood vessels of the target subject, the second medical image indicating an interventional tool in the target subject;
determining an initial registration relationship between the first medical image and the second medical image;
determining, based on a first physiological feature of the target subject at an acquisition time of the second medical image, a first motion state of the blood vessels at the acquisition time; and
determining a target registration relationship between the first medical image and the second medical image based on the initial registration relationship and the first motion state of the blood vessels,
**characterized in that**,
the determining a target registration relationship based on the initial registration relationship and the first motion state of the blood vessels includes:
generating a first auxiliary registration relationship between the first medical image and the second medical image based on the first motion state of the blood vessels;
determining a first weight for the initial registration relationship and a second weight for the first auxiliary registration relationship based on the second medical image;
determining the target registration relationship based on the first auxiliary registration relationship, the initial registration relationship, the first weight, and the second weight.

14. A non-transitory computer readable medium, comprising executable instructions that, when executed by at least one processor, direct the at least one processor to perform a method for image registration, the method comprising:
obtaining a first medical image and a second medical image of a target subject, the first medical image indicating blood vessels of the target subject, the second medical image indicating an interventional tool in the target subject;
determining an initial registration relationship between the first medical image and the second medical image;
determining, based on a first physiological feature of the target subject at an acquisition time of the second medical image, a first motion state of the blood vessels at the acquisition time; and
determining a target registration relationship between the first medical image and the second medical image based on the initial registration relationship and the first motion state of the blood vessels,
**characterized in that**,
the determining a target registration relationship based on the initial registration relationship and the first motion state of the blood vessels includes:
generating a first auxiliary registration relationship between the first medical image and the second medical image based on the first motion state of the blood vessels;
determining a first weight for the initial registration relationship and a second weight for the first auxiliary registration relationship based on the second medical image;
determining the target registration relationship based on the first auxiliary registration relationship, the initial registration relationship, the first weight, and the second weight.

## Patentansprüche

1. Verfahren zur Bildregistrierung, das auf einer Rechenvorrichtung implementiert wird, die mindestens eine Speichervorrichtung (150), die einen Satz Anweisungen speichert, und mindestens einen Prozessor aufweist, der mit der mindestens einen Speichervorrichtung (150) in Kommunikation steht, wobei das Verfahren umfasst:
Erhalten eines ersten medizinischen Bildes und eines zweiten medizinischen Bildes eines Zielsubjekts, wobei das erste medizinische Bild Blutgefäße des Zielsubjekts anzeigt, wobei das zweite medizinische Bild ein Eingriffswerkzeug in dem Zielsubjekt anzeigt;
Bestimmen einer Anfangsregistrierungsbeziehung zwischen dem ersten medizinischen Bild und dem zweiten medizinischen Bild;
Bestimmen eines ersten Bewegungszustands der Blutgefäße zum Erfassungszeitpunkt auf Grundlage eines ersten physiologischen Merkmals des Zielsubjekts zu einem Erfassungszeitpunkt des zweiten medizinischen Bildes; und
Bestimmen einer Zielregistrierungsbeziehung zwischen dem ersten medizinischen Bild und dem zweiten medizinischen Bild auf Grundlage der Anfangsregistrierungsbeziehung und des ersten Bewegungszustands der Blutgefäße,
**dadurch gekennzeichnet, dass**
das Bestimmen einer Zielregistrierungsbeziehung auf Grundlage der Anfangsregistrierungsbeziehung und des ersten Bewegungszustands der Blutgefäße beinhaltet:
Erzeugen einer ersten Hilfsregistrierungsbeziehung zwischen dem ersten medizinischen Bild und dem zweiten medizinischen Bild auf Grundlage des ersten Bewegungszustands der Blutgefäße;
Bestimmen eines ersten Gewichts für die Anfangsregistrierungsbeziehung und eines zweiten Gewichts für die erste Hilfsregistrierungsbeziehung auf Grundlage des zweiten medizinischen Bildes;
Bestimmen der Zielregistrierungsbeziehung auf Grundlage der ersten Hilfsregistrierungsbeziehung, der Anfangsregistrierungsbeziehung, des ersten Gewichts und des zweiten Gewichts.

2. Verfahren nach Anspruch 1, wobei das erste medizinische Bild ein vor einer Operation aufgenommenes Angiographiebild beinhaltet und das zweite medizinische Bild ein während der Operation aufgenommenes Fluoroskopiebild beinhaltet.

3. Verfahren nach Anspruch 1 oder 2, wobei das Bestimmen einer Anfangsregistrierungsbeziehung zwischen dem ersten medizinischen Bild und dem zweiten medizinischen Bild beinhaltet:
Bestimmen von Mittellinien der Blutgefäße in dem ersten medizinischen Bild;
Bestimmen einer Mittellinie des Eingriffswerkzeugs in dem zweiten medizinischen Bild; und
Bestimmen der Anfangsregistrierungsbeziehung auf Grundlage der Mittellinien der Blutgefäße und der Mittellinie des Eingriffswerkzeugs.

4. Verfahren nach Anspruch 3, wobei das Bestimmen der Anfangsregistrierungsbeziehung auf Grundlage der Mittellinien der Blutgefäße und der Mittellinie des Eingriffswerkzeugs beinhaltet:
Erhalten von Projektionsdaten der Mittellinien der Blutgefäße durch Projizieren der Mittellinien auf eine Ebene, die dem zweiten medizinischen Bild entspricht;
Bestimmen einer Zielmittellinie, die mit der Mittellinie des Eingriffswerkzeugs übereinstimmt, auf Grundlage der Projektionsdaten der Mittellinien; und
Bestimmen der Anfangsregistrierungsbeziehung durch Durchführen eines Registrierungsvorgangs an der Zielmittellinie und der Mittellinie des Eingriffswerkzeugs.

5. Verfahren nach einem der Ansprüche 1-4, wobei das Bestimmen eines ersten Bewegungszustands der Blutgefäße zum Erfassungszeitpunkt beinhaltet:
Erhalten einer Zuordnungsbeziehung zwischen physiologischen Phasen und Bewegungszuständen von Blutgefäßen; und
Bestimmen des ersten Bewegungszustands der Blutgefäße auf Grundlage des ersten physiologischen Merkmals und der Zuordnungsbeziehung.

6. Verfahren nach Anspruch 5, wobei die Zuordnungsbeziehung bestimmt wird durch:
Erhalten von medizinischen Beispielbildern des Zielsubjekts und eines physiologischen Beispielmerkmals, das jedem medizinischen Beispielbild entspricht, wobei die medizinischen Beispielbilder nacheinander über mindestens einen physiologischen Zyklus hinweg aufgenommen werden und die Blutgefäße des Zielsubjekts anzeigen;
Bestimmen von Relativbewegungen der Blutgefäße zwischen Paaren benachbarter medizinischer Beispielbilder unter den medizinischen Beispielbildern; und
Bestimmen der Zuordnungsbeziehung auf Grundlage des physiologischen Beispielmerkmals und der Relativbewegungen der Blutgefäße.

7. Verfahren nach Anspruch 6, wobei das Bestimmen von Relativbewegungen der Blutgefäße zwischen Paaren benachbarter medizinischer Beispielbilder unter den medizinischen Beispielbildern beinhaltet:
für jedes Paar benachbarter medizinischer Beispielbilder,
Bestimmen von Positionsinformationen eines Untersuchungsbereichs (ROI) in jedem medizinischen Beispielbild des Paares; und
Bestimmen der Relativbewegung der Blutgefäße auf Grundlage der Positionsinformationen des ROI in den medizinischen Beispielbildern des Paares.

8. Verfahren nach Anspruch 6 oder 7, wobei das Bestimmen der Zuordnungsbeziehung auf Grundlage des physiologischen Beispielsmerkmals und der Relativbewegungen der Blutgefäße beinhaltet:
für jede physiologische Phase in dem mindestens einen physiologischen Zyklus,
Auswählen eines oder mehrerer medizinischer Beispielbilder aus den medizinischen Beispielbildern, die der physiologischen Phase entsprechen, auf Grundlage des physiologischen Beispielmerkmals, das jedem medizinischen Beispielbild entspricht;
Bestimmen des Bewegungszustands der Blutgefäße, der der physiologischen Phase entspricht, auf Grundlage der Relativbewegungen, die dem einen oder den mehreren ausgewählten medizinischen Beispielbildern entsprechen; und
Bestimmen der Zuordnungsbeziehung auf Grundlage des Bewegungszustands der Blutgefäße, der der jeweiligen physiologischen Phase entspricht.

9. Verfahren nach Anspruch 1, wobei das Bestimmen eines ersten Gewichts für die Anfangsregistrierungsbeziehung und eines zweiten Gewichts für die erste Hilfsregistrierungsbeziehung auf Grundlage des zweiten medizinischen Bildes beinhaltet:
Segmentieren einer Mittellinie des Eingriffswerkzeugs in dem zweiten medizinischen Bild;
Bestimmen eines ersten Auswertungsergebnisses eines Segmentierungsergebnisses der Mittellinie des Eingriffswerkzeugs; und
Bestimmen des ersten Gewichts und des zweiten Gewichts auf Grundlage des ersten Auswertungsergebnisses.

10. Verfahren nach einem der Ansprüche 1-9, wobei das Bestimmen einer Zielregistrierungsbeziehung umfasst:
Erhalten eines zweiten physiologischen Merkmals des Zielsubjekts zum Erfassungszeitpunkt des zweiten medizinischen Bildes;
Bestimmen eines zweiten Bewegungszustands der Blutgefäße auf Grundlage des zweiten physiologischen Merkmals; und
Bestimmen der Zielregistrierungsbeziehung auf Grundlage der Anfangsregistrierungsbeziehung, des ersten Bewegungszustands und des zweiten Bewegungszustands.

11. Verfahren nach einem der Ansprüche 1-10, wobei das zweite medizinische Bild während einer Operation aufgenommen wird und das Bestimmen der Zielregistrierungsbeziehung umfasst:
Erhalten von Überwachungsinformationen des Körpers des Zielsubjekts während der Operation;
in Reaktion auf das Erkennen einer starren Bewegung des Körpers des Zielsubjekts auf Grundlage der Überwachungsinformationen, Aktualisieren der Anfangsregistrierungsbeziehung auf Grundlage der erkannten starren Bewegung;
Bestimmen der Zielregistrierungsbeziehung auf Grundlage der aktualisierten Anfangsregistrierungsbeziehung und des ersten Bewegungszustands.

12. Verfahren nach einem der Ansprüche 1-11, wobei das Bestimmen eines ersten Bewegungszustands umfasst:
Erhalten einer ersten physiologischen Kurve des Zielsubjekts in einem vorbereitenden Scan und von medizinischen Beispielbildern des Zielsubjekts, die nacheinander über mehrere physiologische Zyklen hinweg in dem vorbereitenden Scan aufgenommen werden;
Erhalten einer zweiten physiologischen Kurve des Zielsubjekts während eines Zeitraums, der den Erfassungszeitpunkt des zweiten medizinischen Bildes beinhaltet;
Identifizieren eines Zielabschnitts in der ersten physiologischen Kurve, der mit der zweiten physiologischen Kurve übereinstimmt; und
Bestimmen des ersten Bewegungszustands auf Grundlage der medizinischen Beispielbilder, die dem Zielabschnitt in der ersten physiologischen Kurve entsprechen.

13. System (100) zur Bildregistrierung, umfassend:
mindestens eine Speichervorrichtung (150), die einen Satz Anweisungen beinhaltet; und
mindestens einen Prozessor, der so konfiguriert ist, dass er mit der mindestens einen Speichervorrichtung (150) kommuniziert, wobei der mindestens eine Prozessor so konfiguriert ist, dass er, wenn er den Satz Anweisungen ausführt, das System (100) anleitet, Vorgänge durchzuführen, die beinhalten:
Erhalten eines ersten medizinischen Bildes und eines zweiten medizinischen Bildes eines Zielsubjekts, wobei das erste medizinische Bild Blutgefäße des Zielsubjekts anzeigt, wobei das zweite medizinische Bild ein Eingriffswerkzeug in dem Zielsubjekt anzeigt;
Bestimmen einer Anfangsregistrierungsbeziehung zwischen dem ersten medizinischen Bild und dem zweiten medizinischen Bild;
Bestimmen eines ersten Bewegungszustands der Blutgefäße zum Erfassungszeitpunkt auf Grundlage eines ersten physiologischen Merkmals des Zielsubjekts zu einem Erfassungszeitpunkt des zweiten medizinischen Bildes; und
Bestimmen einer Zielregistrierungsbeziehung zwischen dem ersten medizinischen Bild und dem zweiten medizinischen Bild auf Grundlage der Anfangsregistrierungsbeziehung und des ersten Bewegungszustands der Blutgefäße,
**dadurch gekennzeichnet, dass**
das Bestimmen einer Zielregistrierungsbeziehung auf Grundlage der Anfangsregistrierungsbeziehung und des ersten Bewegungszustands der Blutgefäße beinhaltet:
Erzeugen einer ersten Hilfsregistrierungsbeziehung zwischen dem ersten medizinischen Bild und dem zweiten medizinischen Bild auf Grundlage des ersten Bewegungszustands der Blutgefäße;
Bestimmen eines ersten Gewichts für die Anfangsregistrierungsbeziehung und eines zweiten Gewichts für die erste Hilfsregistrierungsbeziehung auf Grundlage des zweiten medizinischen Bildes;
Bestimmen der Zielregistrierungsbeziehung auf Grundlage der ersten Hilfsregistrierungsbeziehung, der Anfangsregistrierungsbeziehung, des ersten Gewichts und des zweiten Gewichts.

14. Nichtflüchtiges, computerlesbares Medium, das ausführbare Anweisungen umfasst, die, wenn sie von mindestens einem Prozessor ausgeführt werden, den mindestens einen Prozessor anleiten, ein Verfahren zur Bildregistrierung durchzuführen, wobei das Verfahren umfasst:
Erhalten eines ersten medizinischen Bildes und eines zweiten medizinischen Bildes eines Zielsubjekts, wobei das erste medizinische Bild Blutgefäße des Zielsubjekts anzeigt, wobei das zweite medizinische Bild ein Eingriffswerkzeug in dem Zielsubjekt anzeigt;
Bestimmen einer Anfangsregistrierungsbeziehung zwischen dem ersten medizinischen Bild und dem zweiten medizinischen Bild;
Bestimmen eines ersten Bewegungszustands der Blutgefäße zum Erfassungszeitpunkt auf Grundlage eines ersten physiologischen Merkmals des Zielsubjekts zu einem Erfassungszeitpunkt des zweiten medizinischen Bildes; und
Bestimmen einer Zielregistrierungsbeziehung zwischen dem ersten medizinischen Bild und dem zweiten medizinischen Bild auf Grundlage der Anfangsregistrierungsbeziehung und des ersten Bewegungszustands der Blutgefäße,
**dadurch gekennzeichnet, dass**
das Bestimmen einer Zielregistrierungsbeziehung auf Grundlage der Anfangsregistrierungsbeziehung und des ersten Bewegungszustands der Blutgefäße beinhaltet:
Erzeugen einer ersten Hilfsregistrierungsbeziehung zwischen dem ersten medizinischen Bild und dem zweiten medizinischen Bild auf Grundlage des ersten Bewegungszustands der Blutgefäße;
Bestimmen eines ersten Gewichts für die Anfangsregistrierungsbeziehung und eines zweiten Gewichts für die erste Hilfsregistrierungsbeziehung auf Grundlage des zweiten medizinischen Bildes;
Bestimmen der Zielregistrierungsbeziehung auf Grundlage der ersten Hilfsregistrierungsbeziehung, der Anfangsregistrierungsbeziehung, des ersten Gewichts und des zweiten Gewichts.

## Revendications

1. Procédé d'enregistrement d'image, mis en œuvre sur un dispositif informatique présentant au moins un dispositif de stockage (150) stockant un ensemble d'instructions, et au moins un processeur en communication avec le au moins dispositif de stockage (150), le procédé comprenant :
l'obtention d'une première image médicale et d'une seconde image médicale d'un sujet cible, la première image médicale indiquant des vaisseaux sanguins du sujet cible, la seconde image médicale indiquant un outil d'intervention chez le sujet cible ;
la détermination d'une relation d'enregistrement initiale entre la première image médicale et la seconde image médicale ;
la détermination, sur la base d'une première caractéristique physiologique du sujet cible à un moment d'acquisition de la seconde image médicale, un premier état de mouvement des vaisseaux sanguins au moment d'acquisition ; et
la détermination d'une relation d'enregistrement cible entre la première image médicale et la seconde image médicale sur la base de la relation d'enregistrement initiale et du premier état de mouvement des vaisseaux sanguins,
**caractérisé en ce que**
la détermination d'une relation d'enregistrement cible sur la base de la relation d'enregistrement initiale et du premier état de mouvement des vaisseaux sanguins inclut :
la génération d'une première relation d'enregistrement auxiliaire entre la première image médicale et la seconde image médicale sur la base du premier état de mouvement des vaisseaux sanguins ;
la détermination d'un premier poids pour la relation d'enregistrement initiale et d'un second poids pour la première relation d'enregistrement auxiliaire sur la base de la seconde image médicale ;
la détermination de la relation d'enregistrement cible sur la base de la première relation d'enregistrement auxiliaire, de la relation d'enregistrement initiale, du premier poids et du second poids.

2. Procédé selon la revendication 1, dans lequel la première image médicale inclut une image d'angiographie recueillie avant une intervention chirurgicale, et la seconde image médicale inclut une image de fluoroscopie recueillie pendant l'intervention chirurgicale.

3. Procédé selon la revendication 1 ou 2, dans lequel la détermination d'une relation d'enregistrement initiale entre la première image médicale et la seconde image médicale inclut :
la détermination d'axes médians des vaisseaux sanguins sur la première image médicale ;
la détermination d'un axe médian de l'outil d'intervention sur la seconde image médicale ; et
la détermination de la relation d'enregistrement initiale sur la base des axes médians des vaisseaux sanguins et de l'axe médian de l'outil d'intervention.

4. Procédé selon la revendication 3, dans lequel la détermination de la relation d'enregistrement initiale sur la base des axes médians des vaisseaux sanguins et de l'axe médian de l'outil d'intervention inclut :
l'obtention de données de projection des axes médians des vaisseaux sanguins en projetant les axes médians sur un plan correspondant à la seconde image médicale ;
la détermination d'un axe médian cible qui correspond à l'axe médian de l'outil d'intervention sur la base des données de projection des axes médians ; et
la détermination de la relation d'enregistrement initiale en effectuant une opération d'enregistrement sur l'axe médian cible et sur l'axe médian de l'outil d'intervention.

5. Procédé selon l'une quelconque des revendications 1-4, dans lequel la détermination d'un premier état de mouvement des vaisseaux sanguins au moment d'acquisition inclut :
l'obtention d'une relation de correspondance entre les phases physiologiques et les états de mouvement de vaisseaux sanguins ; et
la détermination du premier état de mouvement des vaisseaux sanguins sur la base de la première caractéristique physiologique et de la relation de correspondance.

6. Procédé selon la revendication 5, dans lequel la relation de correspondance est déterminée par :
l'obtention d'images médicales d'échantillon du sujet cible et d'une caractéristique physiologique d'échantillon correspondant à chaque image médicale d'échantillon, les images médicales d'échantillon étant collectées séquentiellement sur au moins un cycle physiologique et indiquant les vaisseaux sanguins du sujet cible ;
la détermination de mouvements relatifs des vaisseaux sanguins entre des paires d'images médicales d'échantillon adjacentes parmi les images médicales d'échantillon ; et
la détermination de la relation de correspondance sur la base de la caractéristique physiologique d'échantillon et des mouvements relatifs des vaisseaux sanguins.

7. Procédé selon la revendication 6, dans lequel la détermination de mouvements relatifs des vaisseaux sanguins entre des paires d'images médicales d'échantillon adjacentes parmi les images médicales d'échantillon inclut :
pour chaque paire d'images médicales d'échantillon adjacentes,
la détermination d'informations de position d'une région d'intérêt (ROI) dans chaque image médicale d'échantillon de la paire ; et
la détermination du mouvement relatif des vaisseaux sanguins sur la base des informations de position de la ROI dans les images médicales d'échantillon de la paire.

8. Procédé selon la revendication 6 ou 7, dans lequel la détermination de la relation de correspondance sur la base de la caractéristique physiologique d'échantillon et des mouvements relatifs des vaisseaux sanguins inclut :
pour chaque phase physiologique dans le au moins un cycle physiologique,
la sélection, parmi les images médicales d'échantillon, d'une ou plusieurs images médicales d'échantillon correspondant à la phase physiologique sur la base de la caractéristique physiologique d'échantillon correspondant à chaque image médicale d'échantillon ;
la détermination de l'état de mouvement de vaisseaux sanguins correspondant à la phase physiologique sur la base des mouvements relatifs correspondant aux une ou plusieurs images médicales d'échantillon sélectionnées ; et
la détermination de la relation de correspondance sur la base de l'état de mouvement de vaisseaux sanguins correspondant à chaque phase physiologique.

9. Procédé de la revendication 1, dans lequel la détermination d'un premier poids pour la relation d'enregistrement initiale et d'un second poids pour la première relation d'enregistrement auxiliaire sur la base de la seconde image médicale inclut :
la segmentation d'un axe médian de l'outil d'intervention sur la seconde image médicale ;
la détermination d'un premier résultat d'évaluation d'un résultat de segmentation de l'axe médian de l'outil d'intervention ; et
la détermination du premier poids et du second poids sur la base du premier résultat d'évaluation.

10. Procédé selon l'une quelconque des revendications 1-9, dans lequel la détermination d'une relation d'enregistrement cible comprend :
l'obtention d'une seconde caractéristique physiologique du sujet cible au moment d'acquisition de la seconde image médicale ;
la détermination d'un second état de mouvement des vaisseaux sanguins sur la base de la seconde caractéristique physiologique ; et
la détermination de la relation d'enregistrement cible sur la base de la relation d'enregistrement initiale, du premier état de mouvement et du second état de mouvement.

11. Procédé selon l'une quelconque des revendications 1-10, dans lequel la seconde image médicale est collectée pendant une intervention chirurgicale, et la détermination de la relation d'enregistrement cible comprend :
l'obtention d'informations de surveillance du corps du sujet cible pendant l'intervention chirurgicale ;
en réponse à la détection d'un mouvement rigide du corps du sujet cible sur la base des informations de surveillance, la mise à jour de la relation d'enregistrement initiale sur la base du mouvement rigide détecté ;
la détermination de la relation d'enregistrement cible sur la base de la relation d'enregistrement initiale mise à jour et du premier état de mouvement.

12. Procédé selon l'une quelconque des revendications 1-11, dans lequel la détermination d'un premier état de mouvement comprend :
l'obtention d'une première courbe physiologique du sujet cible dans un pré-scan et d'images médicales d'échantillon du sujet cible collectées séquentiellement sur de multiples cycles physiologiques dans le pré-scan ;
l'obtention d'une seconde courbe physiologique du sujet cible pendant une période incluant le moment d'acquisition de la seconde image médicale ;
l'identification d'une portion cible dans la première courbe physiologique qui correspond à la seconde courbe physiologique ; et
la détermination du premier état de mouvement sur la base des images médicales d'échantillon correspondant à la portion cible dans la première courbe physiologique.

13. Système (100) d'enregistrement d'image, comprenant :
au moins un dispositif de stockage (150) incluant un ensemble d'instructions ; et
au moins un processeur configuré pour communiquer avec le au moins un dispositif de stockage (150), dans lequel, lors de l'exécution de l'ensemble d'instructions, le au moins un processeur est configuré pour amener le système (100) à effectuer des opérations incluant :
l'obtention d'une première image médicale et d'une seconde image médicale d'un sujet cible, la première image médicale indiquant des vaisseaux sanguins du sujet cible, la seconde image médicale indiquant un outil d'intervention chez le sujet cible ;
la détermination d'une relation d'enregistrement initiale entre la première image médicale et la seconde image médicale ;
la détermination, sur la base d'une première caractéristique physiologique du sujet cible à un moment d'acquisition de la seconde image médicale, un premier état de mouvement des vaisseaux sanguins au moment d'acquisition ; et
la détermination d'une relation d'enregistrement cible entre la première image médicale et la seconde image médicale sur la base de la relation d'enregistrement initiale et du premier état de mouvement des vaisseaux sanguins,
**caractérisé en ce que**
la détermination d'une relation d'enregistrement cible sur la base de la relation d'enregistrement initiale et du premier état de mouvement des vaisseaux sanguins inclut :
la génération d'une première relation d'enregistrement auxiliaire entre la première image médicale et la seconde image médicale sur la base du premier état de mouvement des vaisseaux sanguins ;
la détermination d'un premier poids pour la relation d'enregistrement initiale et d'un second poids pour la première relation d'enregistrement auxiliaire sur la base de la seconde image médicale ;
la détermination de la relation d'enregistrement cible sur la base de la première relation d'enregistrement auxiliaire, de la relation d'enregistrement initiale, du premier poids et du second poids.

14. Support non transitoire lisible par ordinateur, comprenant des instructions exécutables qui, lorsqu'elles sont exécutées par au moins un processeur, amènent le au moins un processeur à mettre en œuvre un procédé d'enregistrement d'image, le procédé comprenant :
l'obtention d'une première image médicale et d'une seconde image médicale d'un sujet cible, la première image médicale indiquant des vaisseaux sanguins du sujet cible, la seconde image médicale indiquant un outil d'intervention chez le sujet cible ;
la détermination d'une relation d'enregistrement initiale entre la première image médicale et la seconde image médicale ;
la détermination, sur la base d'une première caractéristique physiologique du sujet cible à un moment d'acquisition de la seconde image médicale, un premier état de mouvement des vaisseaux sanguins au moment d'acquisition ; et
la détermination d'une relation d'enregistrement cible entre la première image médicale et la seconde image médicale sur la base de la relation d'enregistrement initiale et du premier état de mouvement des vaisseaux sanguins,
**caractérisé en ce que**
la détermination d'une relation d'enregistrement cible sur la base de la relation d'enregistrement initiale et du premier état de mouvement des vaisseaux sanguins inclut :
la génération d'une première relation d'enregistrement auxiliaire entre la première image médicale et la seconde image médicale sur la base du premier état de mouvement des vaisseaux sanguins ;
la détermination d'un premier poids pour la relation d'enregistrement initiale et d'un second poids pour la première relation d'enregistrement auxiliaire sur la base de la seconde image médicale ;
la détermination de la relation d'enregistrement cible sur la base de la première relation d'enregistrement auxiliaire, de la relation d'enregistrement initiale, du premier poids et du second poids.
